(19) Europäisches Patentamt / European Patent Office / Office européen des brevets

(11) **EP 4 275 493 A1**

(12) **EUROPEAN PATENT APPLICATION**

(43) Date of publication:
**15.11.2023 Bulletin 2023/46**

(21) Application number: **23159276.7**

(22) Date of filing: **08.10.2020**

(51) International Patent Classification (IPC):
***A01N 25/04*** (2006.01) ***A01N 25/30*** (2006.01)
***A01N 43/40*** (2006.01) ***A01N 43/78*** (2006.01)
***A01N 33/12*** (2006.01) ***A01P 7/00*** (2006.01)
***A01N 43/56*** (2006.01) ***A01N 47/06*** (2006.01)
***A01N 47/40*** (2006.01) ***A01N 43/36*** (2006.01)

(52) Cooperative Patent Classification (CPC):
(C-Sets available)
**A01N 43/40; A01N 25/04; A01N 25/30; A01N 33/12; A01N 43/36; A01N 43/56; A01N 47/06; A01N 47/40** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2019 EP 19202562**

(62) Document number(s) of the earlier application(s) in accordance with Art. 76 EPC:
**20789579.8 / 4 040 962**

(71) Applicant: **Bayer Aktiengesellschaft**
**51373 Leverkusen (DE)**

(72) Inventors:
- **GAERTZEN, Oliver**
  **50931 Köln (DE)**
- **DÜLLBERG, Tobias**
  **51375 Leverkusen (DE)**
- **HILZ, Emilia**
  **42781 Haan (DE)**

(74) Representative: **BIP Patents**
**c/o Bayer Intellectual Property GmbH**
**Alfred-Nobel-Straße 50**
**40789 Monheim am Rhein (DE)**

Remarks:
This application was filed on 28-02-2023 as a divisional application to the application mentioned under INID code 62.

(54) **FORMULATION OF INSECTICIDAL MIXTURES COMPRISING GLYCOL ETHER SOLVENTS**

(57) The invention relates to insecticidal active ingredient formulations comprising at least one dissolved active ingredient and one active ingredient in solid form having good storage stability at high and low temperatures and high active ingredient penetration, to a process for production thereof and to the use thereof for application of the active ingredients present.

FIG. 2: IR-Spectrum

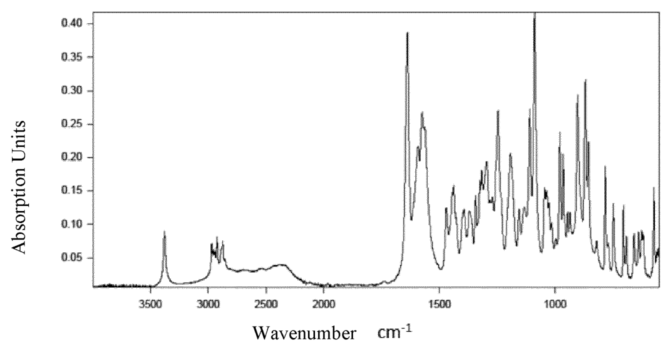


EP 4 275 493 A1

(52) Cooperative Patent Classification (CPC): (Cont.)

C-Sets
**A01N 43/36, A01N 25/02, A01N 25/30;**
**A01N 43/36, A01N 43/56;**
**A01N 43/36, A01N 47/06;**
**A01N 43/36, A01N 47/40;**
**A01N 43/40, A01N 25/02, A01N 25/30;**
**A01N 43/40, A01N 25/02, A01N 25/30, A01N 43/36;**
**A01N 43/40, A01N 25/02, A01N 33/12, A01N 43/36;**
**A01N 43/40, A01N 25/04, A01N 33/12, A01N 43/36;**
**A01N 43/40, A01N 43/56;**
**A01N 43/40, A01N 47/06;**
**A01N 43/40, A01N 47/40**

## Description

The invention relates to insecticidal active ingredient formulations comprising at least one dissolved active ingredient and one active ingredient in solid form having good storage stability at high and low temperatures and high active ingredient penetration, to a process for production thereof and to the use thereof for application of the active ingredients present. The present invention further relates to adjuvant combinations for insecticidal active ingredient formulations having at least one dissolved active ingredient and at least one active ingredient in solid form for improving the penetration of both active ingredients.

To display biological efficacy, systemic active agrochemical ingredients, especially systemic insecticides, need a formulation which enables uptake of the active ingredients into the plants/the target organisms. The best effect can be achieved in that the corresponding active ingredients are either diluted in aqueous solution for use and/or are already preferably in the dissolved state in the concentrate, such that a high active ingredient concentration is available at any time.

This is the case whenever active ingredients or active ingredient combinations are formulated as an emulsion concentrate (EC) or soluble liquid (SL), whereas the availability of dissolved and suspended active ingredients is limited via the dissolution equilibrium.

Furthermore, biological activity can optionally be increased further by adding suitable adjuvants/penetrants.

As mentioned above, in formulations such as suspension concentrates (SC) and/or oil-based suspension concentrates (OD), the active ingredients or active ingredient combinations are not in dissolved form but in solid, particulate form, and so these active ingredients in the formulations typically do not have good bioavailability. It is possible here to increase biological activity essentially only by addition of suitable adjuvants/penetrants, but this, by comparison with the above-described EC or SL formulations, nevertheless leads to reduced biological activity.

It is known that active agrochemical ingredients differ from one another in aspects including their physicochemical properties, for example solubility in water, solvents and/or oils, melting and boiling point, polarity, molar mass, etc. These properties affect the formulability of the active ingredients. Many known active agrochemical ingredients, for example, have a high melting point and can therefore withstand thermal stresses as occur, for example, in the production of suspension concentrates. By contrast, active ingredients having a low melting point are able to withstand these production conditions only with difficulty and can be produced as storage-stable suspensions only to a very limited degree since softening or melting of the active ingredient is to be expected at higher temperatures. However, if the active ingredient is no longer in crystalline form, the physical stability of the product formulated is often lowered significantly and it no longer has any practical utility.

It is additionally known that organic substances have different water solubilities, and these water solubilities, according to chemical characteristics, may be pH-dependent, for example through salt formation.

It is also known that it is often appropriate to combine active agrochemical ingredients with one another in order to prevent, for example, formation of resistance (for example, by combining different mechanisms of action), or else when pests respond differently to different active ingredients, or in order to extend the spectrum of action of the mixture. The mixing of the active ingredients in the latter case, for example, can distinctly reduce the effective application rate, which enables specific control of harmful insects without harming beneficial organisms excessively or at all. Another reason for the use of active ingredient mixtures could be the different duration of action (half-life in the plant or in the soil) of the active ingredients, such that just one treatment generates protection for a very long period.

It is a feature of stable suspension concentrates that they are both physically and chemically storage-stable over a prolonged period (12-24 months) and over a wide temperature range (0 to 54°C). This broad temperature range is required in order that, advantageously, just a single formulation with the same active ingredients or active ingredient combinations can be used in different climatic regions.

The storage stability of suspension concentrates is characterized in that, inter alia, containers of these suspension concentrates have only low phase separation, if any, over the period of storage. A further parameter for the stability of suspension concentrates is, for example, the stability of the dispersion in the concentrate, which is manifested in the presence or absence of agglomerates in the concentrate.

WO 2011/029552 describes alkyl polypropylene glycol-polyethylene glycol (e.g. Antarox B/848)-containing agrochemical formulations in which this surfactant class is used as emulsifier and/or penetrant for active agrochemical ingredients.

Furthermore, WO 2003/000053 describes particular alkyl polypropylene glycol-polyethylene glycols, for example Atlas G5000, as dispersant for organic crop protection products in oils.

The use of ammonium salts to enhance the action of active agrochemical ingredients is known in the literature; for example, WO 2011/131623 (US 2011/0281727 A1, Fischer et al.) describes insecticidal and/or herbicidal formulations based on heterocyclyl-based tetramic acids having improved efficacy in the presence of ammonium salts. Furthermore, WO 2007/068428 describes activity-enhancing effects of phenyl-substituted cyclic keto-enols in the presence of ammonium salts. WO 2011/131623 is directed to a combination of a single active ingredient selected from a group of substances of the formula [I] and an organic or inorganic ammonium or phosphonium salt, and to the use thereof in an aqueous

spray liquor in the presence or absence of a suitable penetrant. Proceeding from the teaching of WO 2011/131623, the expert is unable to draw any conclusions as to formulations with combinations of further active ingredients, or to the physical and chemical stability of these mixture formulations. Suitable penetrants are described in broad terms in paragraphs [0111] to [0171] and generally claimed in [0178], but only rapeseed oil methyl ester is cited as an example of a vegetable oil derivative, and Genapol LRO as an example of an anionic alcohol ether sulfate.

A formulation having good penetration of a dissolved active ingredient and an undissolved active ingredient according to the present invention is neither described or suggested in WO 2011/131623.

Oil-based formulations containing ammonium salts are likewise known in the literature. For example, WO 2008/151725 describes adjuvant compositions based on oils in which ammonium salts are in dispersed form. Furthermore, EP 2193712 A1 describes oil-based agrochemical formulations in which ammonium salts are in dispersed form. However, there is no description of suspensions of ammonium salts in water-miscible solvents.

In summary, however, none of the documents cited above, either individually or viewed jointly, gives a pointer that alkyl polypropylene glycol-polyethylene glycols, for example Antarox B/848, can be used as effective dispersants of inorganic ammonium salts at high loading in polar, water-soluble solvents, such as glycol ethers, especially in conjunction with suspended and dissolved active ingredients.

Soluble water-based concentrates of tetramic acid derivatives are known from the prior art, for example from WO 2009/115262. Owing to solubility problems, these are not combinable with particular crop protection products and formulation ingredients. Furthermore, these water-based SL formulations generally have high pH values that likewise lead to incompatibility with particular base-sensitive crop protection products and formulation ingredients.

The problem addressed was thus that of developing a stable formulation that consists of a combination of a dissolved active ingredient with a suspended active ingredient, has good bioavailability and penetration capacity - of both active ingredients -, and has good storage stability both at high and low temperatures. The active ingredients are preferably insecticides.

This problem was solved by the formulations described below comprising an active ingredient combination and an ammonium salt and a glycol ether as solvent.

The invention therefore provides insecticidal compositions comprising:

a. at least one active ingredient solid at room temperature, which is preferably insoluble or sparingly soluble in the chosen solvent g),

b. at least one active ingredient soluble in an organic solvent other than a),

c. at least one ammonium salt,

d. at least one dispersant from the class of the alkyl propoxylate ethoxylates,

e. optionally one or more surfactants,

f. at least one water-insoluble filler,

g. at least one solvent from the group of the glycol ethers, and

h. further adjuvants.

In a preferred embodiment, component e) is obligatory.

Further, the compositions in a preferred embodiment are essentially free of water. The term "essentially free of water" refers to compositions that are containing less than 5% of water, preferably less than 4% of water and more preferably less than 3% of water.

It has been found in accordance with the invention that corresponding compositions have good penetration-promoting properties for both active agrochemical ingredients present and high stability. This was surprising given the different properties of active ingredients a) and b).

In the present invention, in formulae, e.g. formula (I), optionally substituted radicals, unless stated otherwise, may be mono- or polysubstituted, where the substituents in the case of polysubstitutions may be the same or different.

Moreover, in ranges of preference stated in the present invention, the different levels of preference should be understood such that they can be combined with one another in permutations, but in any case identical levels of preference and especially the most preferred embodiment/level of preference in each case are to be combined with one another and are indeed disclosed as such a combination.

Compositions as described in the present application that consist solely of the essential components (not

optional components) should likewise be considered to be disclosed.

Room temperature in the context of the present invention means, unless stated otherwise, a temperature of 20°C to 25°C.

Components a-h are defined further hereinafter.

a. Active ingredient solid at room temperature

The active ingredient solid at room temperature is preferably selected from the group comprising insecticides, herbicides and fungicides. Further preferably, the active ingredients selected are insoluble or only slightly soluble in the chosen solvent g). Preference is further given to active insecticidal ingredients that are solid at room temperature and are insoluble or only sparingly soluble in the chosen solvent g).

Sparingly soluble or insoluble active ingredients in the context of the present invention are active ingredients that are solid at room temperature and have a solubility at 20°C in the chosen solvent g) of preferably not more than 5 g/l, further preferably not more than 4 g/l, even further preferably not more than 2.5 g/l, and especially preferably not more than 1 g/l.

Even further preferably, the active ingredients are selected from the group comprising diamide insecticides (broflanilide, chlorantraniliprole, cyantraniliprole, cyclaniliprole, cyhalodiamide, flubendiamide, tetrachlorantraniliprole and tetraniliprole), spinosyns (IRAC group 5), what are called "mectins" (e.g. abamectin, emamectin benzoate, milbemectin; IRAC group 6), ethiprole, triflumuron, deltamethrin, thiacloprid, and tetronic acid and tetramic acid derivatives (IRAC Group 23, including the compounds of formulae I and II specified below).

In a preferred embodiment, component a) in the compositions according to the invention is tetraniliprole, cyantraniliprole, ethiprole, thiacloprid, spirotetramat, or
a keto-enol based on tetramic acids, preferably compounds of the formula (I)

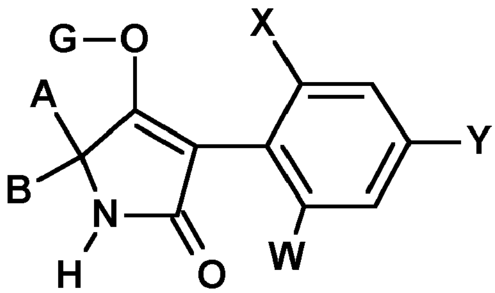

(I)

in which

W and Y are independently hydrogen, $C_1$-$C_4$-alkyl, chlorine, bromine, iodine or fluorine,

X is $C_1$-$C_4$-alkyl, $C_1$-$C_4$-alkoxy, chlorine, bromine or iodine,

A, B and the carbon atom to which they are bonded are $C_3$-$C_6$-cycloalkyl substituted by an optionally $C_1$-$C_4$-alkyl- or $C_1$-$C_4$-alkoxy-$C_1$-$C_2$-alkyl-substituted alkylenedioxy group that forms a 5-membered or 6-membered ketal together with the carbon atom to which it is bonded,

G is hydrogen (a) or is one of the groups

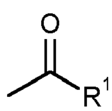 (b), 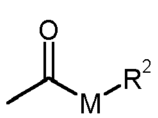 (c),

E (d)
in which

E is a metal ion or an ammonium ion,
M is oxygen or sulfur,

$R^1$ is straight-chain or branched $C_1$-$C_6$-alkyl,
$R^2$ is straight-chain or branched $C_1$-$C_6$-alkyl.

Usable with particular preference are tetramic acid derivatives of the abovementioned formula (I) in which the radicals are defined as follows:

W is more preferably methyl,
X is more preferably chlorine or methyl (more preferably methyl),
Y is more preferably chlorine, bromine or methyl,
A, B and the carbon atom to which they are bonded are more preferably saturated $C_6$-cycloalkyl substituted by an alkylenedioxy group that forms a 5-membered or 6-membered ketal together with the carbon atom to which it is bonded,
G is more preferably hydrogen (a) or is one of the groups

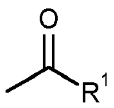 (b), 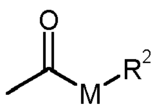 (c),

E (d),
in which
M is oxygen,
E is one metal ion equivalent or an ammonium ion (specifically sodium or potassium),
$R^1$ is more preferably straight-chain or branched $C_1$-$C_4$-alkyl,
$R^2$ is more preferably straight-chain or branched $C_1$-$C_4$-alkyl.

Specifically usable are tetramic acid derivatives of the abovementioned formula (I) with G = hydrogen (a).
Likewise specifically usable are tetramic acid derivatives of the abovementioned formula (I) with G = E (d).
Especially preferably usable are tetramic acid derivatives of the abovementioned formula (I) in which the radicals are defined as follows:

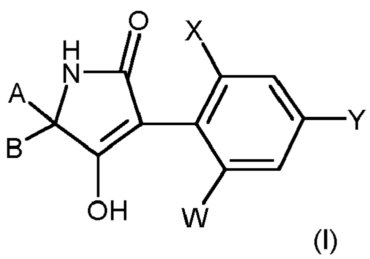
(I)

| Ex. No. | W | X | Y | A | B | known from WO 06/089633; Ex. No. |
|---|---|---|---|---|---|---|
| I-1 | $CH_3$ | $CH_3$ | $CH_3$ | 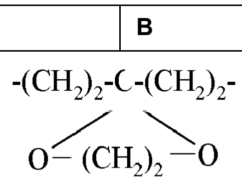 | | I-1-a-2 |
| I-2 | $CH_3$ | $CH_3$ | Cl | 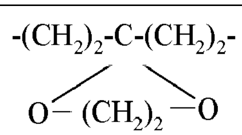 | | I-1-a-4 |
| I-3 | $CH_3$ | $CH_3$ | Br | 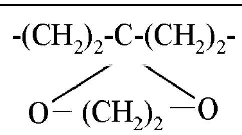 | | I-1-a-26 |

(continued)

| Ex. No. | W | X | Y | A | B | known from WO 06/089633; Ex. No. |
|---|---|---|---|---|---|---|
| I-4 | $CH_3$ | $CH_3$ | $CH_3$ | 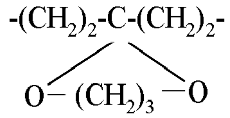 | | I-1-a-18 |
| I-5 | $CH_3$ | $CH_3$ | Cl | 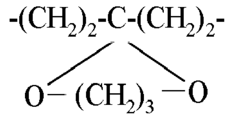 | | I-1-a-14 |
| I-6 | $CH_3$ | $CH_3$ | Br | 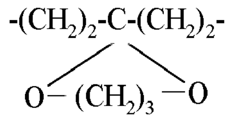 | | I-1-a-19 |

In a particularly preferred embodiment, component a) is a compound of the formula

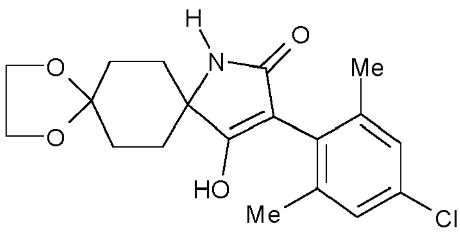

(I-2).

Compound I-2 is preferably used in the form of its most thermodynamically stable polymorphous structure. This crystal structure and further physical data were determined as follows:

Sample preparation:

Compound I-2 ($C_{19}H_{22}ClNO_4$ / MW = 363.84 g/mol) was crystallized from methanol and dried at room temperature to obtain modification A.

Modification A of I-2 can be characterized by x-ray powder diffractometry based on the corresponding diffraction diagrams that have been recorded at 25°C and with Cu-K$\alpha$ 1 radiation (1.5406 Å) (FIGURE 1).

Modification A according to the present invention exhibits at least 3, preferably at least 5, further preferably at least 7, even further preferably at least 10, and most preferably all the reflections as shown in FIGURE 1:

Modification A according to the present invention is also characterized by the x-ray diffraction diagram shown in Figure I.

Crystallographic studies on single crystals of modification A showed that the crystal structure is monoclinic. The unit cell has the $P2_1/c$ space group.

Table 2: Crystallographic properties of modification A

| Parameter | *Modification A* |
|---|---|
| Crystal system | Monoclinic |
| Space group | $P2_1/c$ |
| a in A | 11.66544(14) |
| b in Å | 9.50603(10) |
| c in Å | 16.66907(19) |
| $\alpha$ | 90 |
| $\beta$ | 110.2045(13) |
| $\gamma$ | 90 |
| Z | 4 |

(continued)

| Parameter | *Modification A* |
|---|---|
| Density (calculated) | 1.393 g/cm$^3$ |
| a, b, c = length of the sides of the unit cell<br>$\alpha$ , $\beta$, $\gamma$ = angles of the unit cell<br>Z = number of molecules in the unit cell | |

**Tables 2a/b:** Crystallographic data/reflections [°2theta] of modification A

| **2a** | **2b** |
|---|---|
| [°2theta] | Reflections [°2theta] |
| Modification A | Modification A |
| 11.3 | 8.0 |
| 14.6 | 10.8 |
| 16.0 | 11.3 |
| 20.1 | 12.2 |
| 21.7 | 14.6 |
| 22.7 | 16.0 |
| 23.1 | 17.6 |
| 24.5 | 18.4 |
| 28.2 | 19.4 |
| 29.0 | 20.1 |
| | 21.7 |
| | 22.7 |
| | 23.1 |
| | 23.8 |
| | 24.5 |
| | 25.9 |
| | 26.4 |
| | 28.2 |
| [°2theta] | Reflections [°2theta] |
| Modification A | Modification A |
| | 29.0 |
| | 29.4 |
| | 30.1 |
| | 30.6 |
| | 32.2 |
| | 36.2 |
| | 37.4 |
| | 38.2 |

(continued)

| 2a | 2b |
|---|---|
| | 39.1 |

The polymorphous form of modification A of I-1 can be determined by IR spectroscopy using the corresponding spectrum that has been recorded at 25°C using a diamond ATR instrument at a resolution of 4 $cm^{-1}$ (FIGURE 2). Modification A of the present invention exhibits at least 3, preferably at least 5, further preferably at least 7 and more preferably all bands as shown in Figure 2 and described in Table 2c.

Table 2c) IR bands [$cm^{-1}$]

| Band maxima [$cm^{-1}$] | Band maxima [$cm^{-1}$] |
|---|---|
| Modification A | |
| 3378<br>2969<br>2955 | 1133<br>1109<br>1088 |
| 2943<br>2924<br>2876<br>2858<br>2326<br>1637<br>1592<br>1575<br>1564<br>1470<br>1444<br>1438<br>1428<br>1394<br>1372<br>1344<br>1325<br>1317<br>1297<br>1272 | 1045<br>1036<br>1027<br>1015<br>997<br>980<br>965<br>946<br>936<br>903<br>869<br>856<br>821<br>783<br>769<br>748<br>704<br>691<br>659<br>639 |
| 1247<br>1194<br>1157 | 625<br>573<br>563<br>553 |

In an alternative embodiment, component a) comprises tetramic acids of the formula (II)

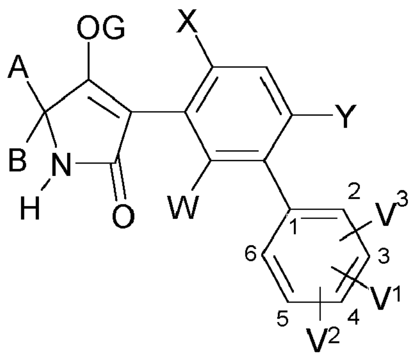

(II)

in which

W and Y are independently hydrogen, $C_1$-$C_4$-alkyl, chlorine, bromine, iodine or fluorine,

X is $C_1$-$C_4$-alkyl, $C_1$-$C_4$-alkoxy, chlorine, bromine or iodine,

$V^1$ is hydrogen, halogen, $C_1$-$C_6$-alkyl, $C_1$-$C_6$-alkoxy, $C_1$-$C_6$-alkylthio, $C_1$-$C_6$-alkylsulfinyl, $C_1$-$C_6$-alkylsulfonyl, $C_1$-$C_4$-haloalkyl, $C_1$-$C_4$-haloalkoxy, nitro or cyano,

$V^2$ is hydrogen, halogen, $C_1$-$C_6$-alkyl or $C_1$-$C_6$-alkoxy,

$V^3$ is hydrogen or halogen,

A, B and the carbon atom to which they are bonded are saturated $C_5$-$C_6$-cycloalkyl in which one ring member has been replaced by oxygen and which is optionally monosubstituted by $C_1$-$C_8$-alkyl, $C_1$-$C_8$-alkoxy or $C_1$-$C_6$-alkyloxy-$C_1$-$C_6$-alkyl,

G is hydrogen (a) or is one of the groups

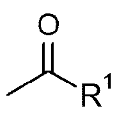 (b), 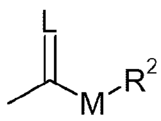 (c),

E (d) in which

- E is a metal ion or an ammonium ion,
- L is oxygen or sulfur and
- M is oxygen or sulfur,
- $R^1$ is straight-chain or branched $C_1$-$C_6$-alkyl,
- $R^2$ is straight-chain or branched $C_1$-$C_6$-alkyl.

Usable with particular preference are tetramic acid derivatives of the abovementioned formula (I) in which the radicals are defined as follows:

- W is more preferably hydrogen or methyl,
- X is more preferably chlorine or methyl,
- Y is more preferably hydrogen,
- $V^1$ is more preferably fluorine or chlorine (specifically fluorine or chlorine in the 4 position),
- $V^2$ is more preferably hydrogen or fluorine (specifically fluorine in the 3 position),
- $V^3$ is more preferably hydrogen or fluorine (specifically fluorine in the 5 position),
- A, B and the carbon atom to which they are bonded are more preferably saturated $C_6$-cycloalkyl in which one ring member has been replaced by oxygen,
- G is more preferably hydrogen (a) or is one of the groups

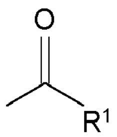 (b), 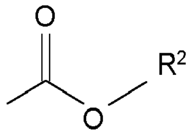 (c),

E (d),
in which
E is more preferably one metal ion equivalent or an ammonium ion (specifically sodium or potassium),
$R^1$ is more preferably straight-chain or branched $C_1$-$C_4$-alkyl,
$R^2$ is more preferably straight-chain or branched $C_1$-$C_4$-alkyl.

Specifically usable are tetramic acid derivatives of the abovementioned formula (I) with G = hydrogen (a).
Likewise specifically usable are tetramic acid derivatives of the abovementioned formula (I) with G = E (d).
Especially preferably usable are tetramic acid derivatives of the abovementioned formula (II) in which the radicals are defined as follows:

| **Ex. No.** | **A B** | **W** | **X** | **Y** | **$V^1$** | **$V^2$** | **$V^3$** | **G** | **known from** WO 08/067911 |
|---|---|---|---|---|---|---|---|---|---|
| II- 1 | -(CHz)z-O-(CHz)z- | H | Cl | H | 4-F | H | H | H | I-1-a-13 |
| II-2 | -(CHz)z-O-(CHz)z- | H | Cl | H | 4-F | 3-F | H | H | I-1-a-21 |
| II-3 | -(CHz)z-O-(CHz)z- | H | Cl | H | 4-F | 3-F | 5-F | H | I-1-a-30 |
| II-4 | $-(CH_2)_2-O-(CH_2)_2-$ | H | $CH_3$ | H | 4-F | H | H | H | I-1-a-1 |
| II-5 | $-(CH_2)_2-O-(CH_2)_2-$ | H | $CH_3$ | H | 4-F | 3-F | H | H | I-1-a-3 |
| II-6 | $-(CH_2)_2-O-(CH_2)_2-$ | H | $CH_3$ | H | 4-F | 3-F | 5-F | H | I-1-a-28 |
| II-7 | $-(CH_2)_2-O-(CH_2)_2-$ | $CH_3$ | $CH_3$ | H | 4-F | H | H | H | I-1-a-4 |
| II-8 | $-(CH_2)_2-O-(CH_2)_2-$ | $CH_3$ | $CH_3$ | H | 4-F | 3-F | H | H | I-1-a-5 |
| II-9 | $-(CH_2)_2-O-(CH_2)_2-$ | $CH_3$ | $CH_3$ | H | 4-F | 3-F | 5-F | H | I-1-a-25 |

In a particularly preferred alternative embodiment, a) is

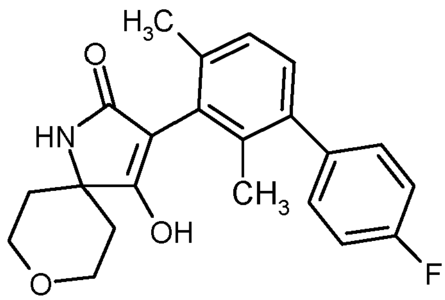
(II-7).

b. Soluble active ingredient

The soluble active ingredient is preferably selected from the group of the insecticides, herbicides and fungicides. Further preferably, the selected active ingredients have good or sufficient solubility in the solvent g) chosen, the solubility at 20°C being preferably at least 10 g/l, further preferably at least 20 g/l, even further preferably at least 30 g/l, and more preferably at least 40 g/l.
The soluble active ingredient is preferably selected from the group of insecticides. Even further preferably, the active ingredients are selected from the group of the nAChR agonists (IRAC group 4, e.g. imidacloprid, thiacloprid, clothianidin, thiamethoxam, acetamiprid, sulfoxaflor, nitenpyram and flupyradifurone), flonicamid and further insecticides as described in WO 2007/115644, for example 4-[[(6-chloropyridin-3-yl)methyl](3-fluoro-n-propyl)amino]furan-2(5H)-one, 4-[[(6-chloropyridin-3-yl)methyl](3,3-dichloroprop-2-en-1-yl)amino]furan-2(5H)-one, 4-[[(6-chloropyridin-3-yl)methyl](2-fluoroethyl)amino]furan-2(5H)-one, (E/Z)-4-[[(6-chloropyridin-3-yl)methyl](2-fluorovinyl)amino]-5-methylfuran-2(5H)-one, 4-[[(6-chloropyridin-3-yl)methyl](2,2-difluoroethyl)amino]-5-methylfuran-2(5H)-one, 3-bromo-4-[[(6-chloropyridin-3-yl)methyl](2,2-difluoroethyl)amino]furan-2(5H)-one, 3-chloro-4-[[(6-chloropyridin-3-yl)methyl](2,2-difluoroethyl)amino]furan-2(5H)-one, or in WO 2009/118025, for example 4-[methyl[(6-chloropyridin-3-yl)methyl](amino)]furan-2(5H)-one.

More preferably, the active ingredients b) are selected from imidacloprid, clothianidin, flupyradifurone, flonicamid and acetamiprid.

Most preferably, active ingredient b) is flupyradifurone.

In another embodiment, active ingredient b) is flonicamid.

In yet another embodiment, active ingredient b) is acetamiprid.

c. Ammonium salt

The ammonium salt is preferably selected from the group comprising water-soluble inorganic ammonium salts.

Further preferably, c) is selected from the group comprising ammonium carbonate, ammonium hydrogensulfate, ammonium sulfate (AMS), ammonium hydrogencarbonate, ammonium carbonate and diammonium hydrogenphosphate (DAHP).

More preferably, c) is DAHP and AMS.

d. Dispersant

Component d) is preferably selected from the group which comprises alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units.

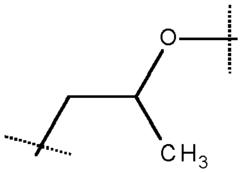

**Formula III-b**

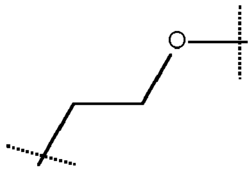

**Formula III-c**

Examples of "alkyl polypropylene glycol-polyethylene glycol compounds" are:

| Trade name | Manufacturer |
|---|---|
| Antarox B/848 | Solvay |
| Antarox BL-470 | Solvay |
| Antarox BL-480 | Solvay |
| Atlas G 5000 | Croda |
| Atlas G 5002 | Croda |
| Emulsogen 3510 | Clariant |
| Emulsogen EP 4901 | Clariant |
| Ethylan NS 500 K | Akzo Nobel |
| Ethylan NS 500 LQ | Akzo Nobel |
| Ethylan NS 505 K | Akzo Nobel |

(continued)

| Trade name | Manufacturer |
|---|---|
| Lucramul AG 411 | Levaco |
| Synergen 848 | Clariant |
| Termul 5429 | Huntsman |
| Tergitol XD | Dow |
| Toximul 8320 | Stepan |
| Toximul 8325 | Stepan |
| Ultraric 5000 | Oxiteno |

and the compounds of the general formula (IIId)

$$R\text{-}O\text{-}(C_mH_{2m}O)_x\text{-}(C_nH_{2n}O)_y\text{-}R' \quad \text{(IIId)}$$

in which the individual radicals and indices have the following definitions:
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3.
In the context of the present invention, a linear $C_1$- to $C_5$-alkyl radical is understood to mean a methyl radical, an ethyl radical, an n-propyl radical, an n-butyl radical or an n-pentyl radical.
In the context of the present invention, a branched $C_3$- to $C_4$-alkyl radical is understood to mean an isopropyl radical, an isobutyl radical or a tert-butyl radical.
In a preferred embodiment, the R and R' radicals are independently selected from the group consisting of a methyl radical, an n-butyl radical and hydrogen.
In an even more preferred embodiment, the R and R' radicals are independently selected from the group consisting of an n-butyl radical and hydrogen.
With regard to the arrangement of the polyethylene and polypropylene units,

(a) either m may assume the value of 2 and n the value of 3;

(b) or m may assume the value of 3 and n the value of 2.

Preference is given to configuration (b) with m = 3 and n = 2.
Very particular preference is given to alkyl polypropylene glycol-polyethylene glycol compounds of the formula (IIId) in which

m is 3,
n is 2,
x is 5 to 80,
y is 5 to 80,
R is n-butyl or hydrogen and
R' is hydrogen.

e. Suitable surfactants e) in the context of the present invention are selected from the group comprising:

e1) surfactants of the polycarboxylate type, for example those such as hydrophobically modified comb-like polymers, for example polyacrylic acid, polymethacrylic acid, polymaleic acid, polymaleic anhydride, a copolymer of maleic acid or maleic anhydride with an olefin (such as isobutylene or diisobutylene), a copolymer of acrylic acid and itaconic acid, a copolymer of methacrylic acid and itaconic acid, a copolymer of maleic acid or maleic anhydride and styrene, a copolymer of acrylic acid and methacrylic acid, a copolymer of acrylic acid and methacrylate, a copolymer of acrylic acid and vinyl acetate, a copolymer of styrene and methacrylic acid, modified copolymers of styrene and methacrylic

acid, a copolymer of maleic acid or maleic anhydride and acrylic acid, an N-methyl fatty acid (e.g. $C_8$-$C_{18}$)-sarcosinate, a carboxylic acid such as a resin acid or a fatty acid (e.g. $C_8$-$C_{18}$) or a salt of such a carboxylic acid. The abovementioned copolymers may also be in the form of their salts, e.g. alkali metal salts (preferably Li, Na, K), alkaline earth metal salts (preferably Ca, Mg), ammonium or various amines. Examples of those described above include Geropon T/36, Geropon TA/72, Tersperse 2700, Atlox Metasperse 550 S, Geropon Ultrasperse, Narlex D-72, Versa TL3 and Agrilan 789 Dry, and

e2) surfactants selected from the group consisting of salts of sulfated formaldehyde condensation products with alkylaromatics, e.g. MORWET D-425 (from Akzo Nobel); OPARYL DT 120, OPARYL DT 201, OPARYL DT 530 (from Bozzetto); TERSPERSE 2020 (from Huntsman) and salts of sulfated formaldehyde condensation products with ditolyl ether (e.g. BAYKANOL SL, from Levaco) and salts of sulfated formaldehyde condensation products with cyclohexanone (e.g. LUCRAMUL DAC 210, from Levaco), and

e3) surfactants selected from the group of the lignosulfonates and salts thereof, preferably selected from the group of lignosulfonates and salts thereof consisting of Borresperse NA, Borresperse 3A, Ultrazine NA, Ufoxane 3A, Vanisperse CB, Marasperse AG, MARASPERSE N 22, MARASPERSE C 21, MARASPERSE CBOS-4, WAFEX CA122 and Borresperse CA from Borregaard; KRAFTSPERSE EDF-350, KRAFTSPERSE 25M, KRAFTSPERSE EDF-450, REAX 100M, REAX 83A, REAX 85A, REAX 88A, REAX 88B, REAX 907, REAX 910, POLYFON H, POLYFON O and POLYFON T from Ingevity; AGRINOL DN 19 and Agrinol C12 from Tembec, and

e4) surfactants selected from the group consisting of sulfated alkylarylsulfonates and salts thereof, e.g. alkylarylsulfonates and salts thereof such as, for example, AEROSOL OS (from Solvay); AGNIQUE ANS 3DNP-U, AGNIQUE ANS 4DNP, AGNIQUE NSC 2NP-U, NEKAL BX DRY (from BASF); MORWET B, MORWET DB, MORWET EFW, MORWET IP (from Akzo Nobel); OPARYL MT 704, OPARYL MT 800, OPARYL MT 804 (from Bozzetto); RHODACAL BX 78, SUPRAGIL WP (from Solvay); SURFOM HRB (from Oxiteno), and

e5) surfactants from the group of the di-/tristyrylphenol ethoxylate phosphates and salts thereof, DISPERSOGEN LFH, DISPERSOGEN TP 160 (from Clariant); LUCRAMUL PPS 16, LUCRAMUL PPS K 16 (from Levaco); PHOSPHOLAN PHB 14 (from Akzo Nobel); SOPROPHOR 3 D 33, SOPROPHOR TS 20-F, SOPROPHOR FL, SOPROPHOR FLK (from Solvay); STEPFAC TSP-PE, STEPFAC TSP PE-K (from Stepan); SURFOM 1323 SC, SURFOM 1325 SC (from Oxiteno); TERSPERSE 2222 (from Huntsman); and from the group of the alcohol ethoxylate phosphates, e.g. EMPIPHOS 03 D (from Akzo Nobel); MULTITROPE 1214, Crodafos series, Atphos 3226 (from Croda); PHOSPHOLAN PE 169 (from Akzo Nobel); RHODAFAC RS-410, RHODAFAC RS-710, RHODAFAC TD 20 F (from Solvay); SERVOXYL VPDZ 20/100 (from Elementis); STEPFAC 8180 (from Stepan); CRAFOL AP261 (from BASF); GERONOL CF/AR (from Clariant).

Further preferably, suitable surfactants are selected from the group comprising surfactants e1), e2), e3), and e4).
Further preferably, suitable surfactants are selected from the group comprising surfactants e1), e2), and e3).
Even further preferably, suitable surfactants are selected from the group comprising surfactants e1) and e2).
More preferably, suitable surfactants are selected from the group comprising surfactants e1).
Very particular preference is given to surfactants from group e1) comprising sodium salts of the copolymers of maleic acid and olefins (e.g. Geropon T/36 / Solvay; Duramax D-305 / Dow); and sodium salts of copolymers of methacrylic acid and styrene (Tersperse 2700 / Huntsman; Atlox Metasperse 500S / Croda); especially sodium salts of the copolymers of maleic acid and olefins (e.g. Geropon T/36).
Suitable surfactants such as Tersperse 2700 are also described in WO 2008036865 A2.
The above-described surfactants can be used either individually or in combination, preference being given to combinations of the surfactants selected from the group of the sodium salts of the copolymers of maleic acid and olefins with salts of sulfated formaldehyde condensation products with alkylaromatics and lignosulfonates and salts thereof.

f. Water-insoluble filler

Suitable fillers are preferably chosen from the group comprising

f1) modified natural silicates such as chemically modified bentonites, hectorites, attapulgites, montmorillonites, smectites or other silicate minerals such as Bentone® (Elementis), Attagel® (BASF), Agsorb® (Oil-Dri Corporation), Pangel B (Tolsa) or Hectorite® (Akzo Nobel),

f2) synthetic silicates and fumed silicas, such as silicates from the Sipernat®, Aerosil® or Durosil® series (Degussa),

the CAB-O-SIL® series (Cabot) or the Van Gel series (R.T. Vanderbilt), and f3) fillers based on synthetic polymers, such as thickeners from the Thixin® or Thixatrol® series (Elementis).

Further preferred are fillers of group f2.
Particular preference is given to fumed silicas as filler f), such as Aerosil products, Aerosil R products and Cab-O-Sil products, and also attapulgites, alone and in mixtures.

g. <u>Solvent</u>

The solvent g) is selected from compounds or mixtures of compounds represented by formula 4, wherein

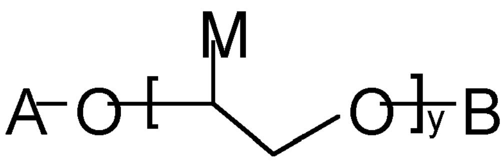

formula 4

y = 1-9

A,B = H, or linear C1-C4-Alkyl, independent from each other, and

M = H, or C1-C2-Alkyl.

With the exception of 1,2-propylene glycol which is explicitly excluded from the definition according to g), which refers to all definitions of g) in the present invention.
In a more preferred embodiment, g) is selected from compounds or mixtures of compounds represented by formula 4, wherein

y = 1-5

A,B = H, or linear C1-C4-Alkyl, independent from each other, and

M = H;

Or g) is selected from compounds or mixtures of compounds represented by formula 4, wherein y = 1-5

A,B = H, or linear C1-C4-Alkyl, independent from each other, and

M = C1-C2-Alkyl;

with the exception of 1,2-propylene glycol which is explicitly excluded from the definition according to g).

Even further preferred, g) is selected from compounds represented by formula 4, wherein

y = 1-3

A,B = H, or Methyl, independent from each other, and

M = Methyl;

with the exception of 1,2-propylene glycol which is explicitly excluded from the definition according to g).

Most preferably, g) is selected from the group comprising dipropylene glycol monomethyl ether, 1-methoxy-2-propanol and dipropylene glycol.

In a preferred embodiment, solvents g) according to the invention can occur in mixtures. Mixtures of any one of g) can be present in ratios ranging from 1:50 to 50:1, preferably in ratios ranging from 1: 25 to 25:1, more preferably in mixtures ranging from 1:10 to 10:1, such as 1:10, 1:8, 1:6, 1:5, 1:2, 1:1, 2:1, 5:1, 6:1, 8:1 or 10:1. Yet another preferred embodiment comprises mixtures of any one of g) in ratios ranging from 1:8 to 1:1, or in ratios ranging from 1:1 to 8:1 .Examples of solvent g) are the Dowanol glycol ether products of Dow, or different grades of Polyethylene glycol ethers (e.g. Ethylene glycol monomethyl ether, Ethylene glycol monoethyl ether, Ethylene glycol monopropyl ether, Ethylene glycol monoisopropyl ether, Ethylene glycol monobutyl ether, Ethylene glycol monophenyl ether, Ethylene glycol monobenzyl ether, Diethylene glycol monomethyl ether, Diethylene glycol monoethyl ether, Diethylene glycol monopropyl ether, Diethylene glycol monoisopropyl ether, Diethylene glycol monobutyl ether, Diethylene glycol monophenyl ether, Diethylene glycol monobenzyl ether, Triethylene glycol monomethyl ether, Triethylene glycol monoethyl ether, Triethylene glycol monopropyl ether, Triethylene glycol monoisopropyl ether, Triethylene glycol monobutyl ether, Triethylene glycol monophenyl ether, Triethylene glycol monobenzyl ether),
or different grades of Polypropylene glycol ethers (e.g. Propylene glycol monomethyl ether, Propylene glycol monoethyl ether, Propylene glycol monopropyl ether, Propylene glycol monoisopropyl ether, Propylene glycol monobutyl ether, Propylene glycol monophenyl ether, Propylene glycol monobenzyl ether, Dipropylene glycol monomethyl ether, Dipropylene glycol monoethyl ether, Dipropylene glycol monopropyl ether, Dipropylene glycol monoisopropyl ether, Dipropylene glycol monobutyl ether, Dipropylene glycol monophenyl ether, Dipropylene glycol monobenzyl ether, Tripropylene glycol monomethyl ether, Tripropylene glycol monoethyl ether, Tripropylene glycol monopropyl ether, Tripropylene glycol monoisopropyl ether, Tripropylene glycol monobutyl ether, Tripropylene glycol monophenyl ether, Tripropylene glycol monobenzyl ether)

h. <u>Further adjuvants</u>

The compositions of the invention optionally comprise further adjuvants h), for example optionally substances from the group of the emulsifiers, the humectants, the foam inhibitors, the preservatives, the dyes, the stabilizers and the antioxidants.

Useful emulsifiers include all customary nonionogenic, anionic, cationic and zwitterionic substances having surface-active properties that are typically used in agrochemical products. These substances include reaction products of fatty acids, fatty acid esters, fatty alcohols, fatty amines, alkylphenols or alkylarylphenols with ethylene oxide and/or propylene oxide and/or butylene oxide and the sulfuric esters thereof, phosphoric monoesters and phosphoric diesters, and also reaction products of ethylene oxide with propylene oxide, and additionally alkylsulfonates, alkyl sulfates, aryl sulfates, tetraalkylammonium halides, trialkylarylammonium halides, alkylamine sulfonates, end group-capped and non-end group-capped alkoxylated linear and branched, saturated and unsaturated alcohols (e.g. butoxy polyethylene-propylene glycols), and polyethylene glycols and polypropylene glycols.

The emulsifiers may be used individually or else in a mixture. Preferred examples include reaction products of castor oil with ethylene oxide in a molar ratio of 1:20 to 1:60, reaction products of C6-C20 alcohols with ethylene oxide in a molar ratio of 1:5 to 1:50, reaction products of C6-C20 alcohols with propylene oxide and ethylene oxide in a molar ratio of 1:1:1 to 1:5:10, reaction products of fatty amines with ethylene oxide in a molar ratio of 1:2 to 1:25, reaction products of 1 mol of phenol with 2 to 3 mol of styrene and 10 to 50 mol of ethylene oxide, reaction products of C8-C12-alkylphenols with ethylene oxide in a molar ratio of 1:5 to 1:30, alkyl glycosides, C8-C16-alkylbenzenesulfonic salts, for example calcium, monoethanolammonium, diethanolammonium and triethanolammonium salts.

Useful humectants are all substances typically usable for this purpose in agrochemical compositions. Preference is given to water-soluble liquids, and examples include glycerol and 1,2-propylen glycol. Useful foam inhibitors are all substances typically usable for this purpose in agrochemical compositions. Preference is given to silicone oils, e.g. SAG1572, and magnesium stearate.

Useful antioxidants are all substances typically usable for this purpose in agrochemical compositions. Preference is given to butylhydroxytoluene.

Useful dyes are all substances typically usable for this purpose in agrochemical compositions. Examples include titanium dioxide, pigment black, zinc oxide and blue pigments, and also Permanent Red FGR.

Possible stabilizers used may, for example, be acids or bases. Examples of acids include citric acid, formic acid, acetic acid or boric acid. Examples of bases include sodium salts of carboxylic acids and mono- or poly-alkyl-substituted amines.

In a preferred embodiment, the invention provides an insecticidal composition comprising:

a. compounds of the formula (I)

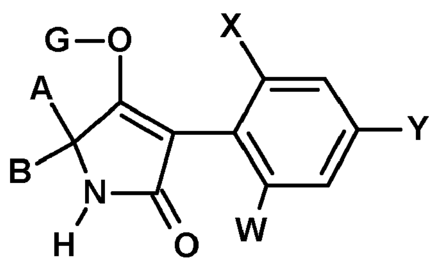

where the compounds of the formula (I) have the following definitions:

W is methyl,

X is chlorine or methyl,

Y is chlorine, bromine or methyl,

A, B and the carbon atom to which they are bonded are saturated C6-cycloalkyl substituted by an alkylenedioxy group which, together with the carbon atom to which it is bonded, forms a 5-membered or 6-membered ketal,

G is hydrogen (a) or is one of the groups

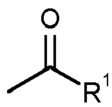 (b), 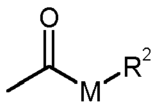 (c),

E (d),
in which

M is oxygen,

E is one metal ion equivalent or an ammonium ion,

$R^1$ is straight-chain or branched $C_1$-$C_4$-alkyl,

$R^2$ is straight-chain or branched $C_1$-$C_4$-alkyl.

b. at least one active ingredient is preferably selected from the group of insecticides comprising nAChR agonists, flonicamid and 4-[[(6-chloropyridin-3-yl)methyl](3-fluoro-n-propyl)amino]furan-2(5H)-one, 4-[[(6-chloropyridin-3-yl)methyl](3,3-dichloroprop-2-en-1-yl)amino]furan-2(5H)-one, 4-[[(6-chloropyridin-3-yl)methyl](2-fhioroethyl)amino]furan-2(5H)-one, (E/Z)-4-[[(6-chloropyridin-3-yl)methyl](2-fluorovinyl)amino]-5-methylfuran-2(5H)-one, 4-[[(6-chloropyridin-3-yl)methyl](2,2-difluoroethyl)amino]-5-methylfuran-2(5H)-one, 3-bromo-4-[[(6-chloropyridin-3-yl)methyl](2,2-difluoroethyl)amino]furan-2(SH)-one, 3-chloro-4-[[(6-chloropyridin-3-yl)methyl](2,2-difluoroethyl)amino]furan-2(5H)-one, and 4-[methyl[(6-chloropyridin-3 -yl)methyl] (amino)]furan-2(5H)-one.

c. at least one ammonium salt selected from the group comprising ammonium carbonate, ammonium hydrogensulfate, ammonium sulfate (AMS), ammonium hydrogencarbonate, ammonium carbonate and diammonium hydrogenphosphate (DAHP),

d. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment, A is a polypropylene glycol fragment consisting of 10 to 40 propylene oxide (PO) units (formula III-b), preferably consisting of 15-35

PO units, more preferably consisting of 20-30 PO units, B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

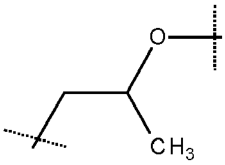

Formula III-b

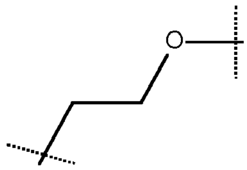

Formula III-c

and alkyl polypropylene glycol-polyethylene glycol compounds of the general formula (IIId)

$$R\text{-}O\text{-}(C_mH_{2m}O)_x\text{-}\ (C_nH_{2n}O)_y\text{-}R' \qquad \text{(IIId)}$$

in which the individual radicals and indices have the following definitions:
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

e. at least one surfactant selected from the group comprising polycarboxylate types, salts of sulfated formaldehyde condensation products with alkylaromatics, salts of sulfated formaldehyde condensation products with ditolyl ether, salts of sulfated formaldehyde condensation products with cyclohexanone, lignosulfonates and salts thereof, sulfated alkylarylsulfonates and the salts thereof, di-/tristyrylphenol ethoxylate phosphates and salts thereof, and alcohol ethoxylate phosphates.

f. at least one filler selected from the group comprising modified natural silicates, silicate minerals, synthetic silicates and fumed silicas, attapulgites and fillers based on synthetic polymers.

g. at least one solvent selected from compounds or mixtures of compounds represented by formula 4, wherein

y = 1-5

A,B = H, or linear C 1-C4-Alkyl, independent from each other, and

M = H;

Or g) is selected from compounds or mixtures of compounds represented by formula 4, wherein y = 1-5

A,B = H, or linear C1-C4-Alkyl

M = C1-C2-Alkyl;

with the exception of 1,2-propylene glycol which is explicitly excluded from the definition according to g).

h. further adjuvants.

In a further-preferred embodiment, the invention provides an insecticidal composition comprising:
a. compound of the formula (I) selected from the following compounds:

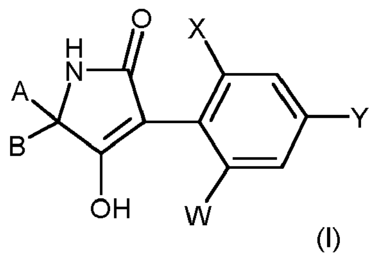

(I)

| W | X | Y | A | B |
|---|---|---|---|---|
| $CH_3$ | $CH_3$ | $CH_3$ | 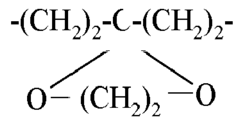 | |
| $CH_3$ | $CH_3$ | Cl | 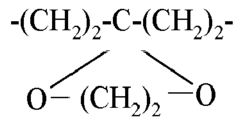 | |
| $CH_3$ | $CH_3$ | Br | 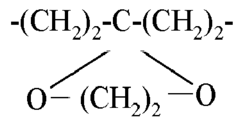 | |
| $CH_3$ | $CH_3$ | $CH_3$ | 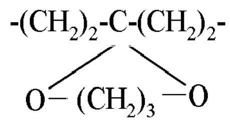 | |
| $CH_3$ | $CH_3$ | Cl | 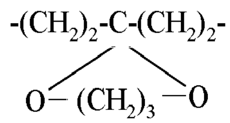 | |
| $CH_3$ | $CH_3$ | Br | 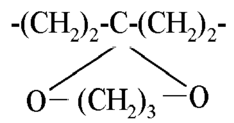 | |

b. at least one active ingredient is preferably selected from the group of insecticides comprising imidacloprid, thiacloprid, clothianidin, thiamethoxam, acetamiprid, sulfoxaflor, nitenpyram and flupyradifurone, flonicamid and 4-[[(6-chloropyridin-3-yl)methyl](3-fluoro-n-propyl)amino]furan-2(5H)-one, 4-[[(6-chloropyridin-3-yl)methyl](3,3-dichloroprop-2-en-1-yl)amino]furan-2(5H)-one, 4-[[(6-chloropyridin-3-yl)methyl](2-fluoroethyl)amino]furan-2(5H)-one, (E/Z)-4-[[(6-chloropyridin-3-yl)methyl](2-fluorovinyl)amino]-5-methylfuran-2(5H)-one, 4-[[(6-chloropyridin-3-yl)methyl](2,2-difluoroethyl)amino]-5-methylfuran-2(5H)-one, 3-bromo-4-[[(6-chloropyridin-3-yl)methyl](2,2-difluoroethyl)amino]furan-2(5H)-one, 3-chloro-4-[[(6-chloropyridin-3-yl)methyl](2,2-difluoroethyl)amino]furan-2(5H)-one, and 4-[methyl[(6-chloropyridin-3 -yl)methyl](amino)]furan-2(5H)-one.

c. at least one ammonium salt selected from the group comprising ammonium carbonate, ammonium hydrogensulfate, ammonium sulfate (AMS), ammonium hydrogencarbonate, ammonium carbonate and diammonium hydrogenphosphate (DAHP),

d. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment, A is a polypropylene glycol fragment consisting of 10 to 40 propylene oxide (PO) units (formula III-b), preferably consisting of 15-35 PO units, more preferably consisting of 20-30 PO units, B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

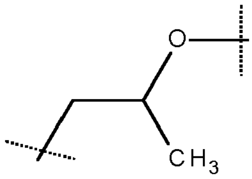

**Formula III-b**

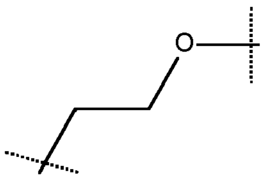

**Formula III-c**

and alkyl polypropylene glycol-polyethylene glycol compounds of the general formula (IIId)

$$R\text{-}O\text{-}(C_mH_{2m}O)_x\text{-}\ (C_nH_{2n}O)_y\text{-}R' \qquad \text{(IIId)}$$

in which the individual radicals and indices have the following definitions:
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

e. at least one surfactant selected from the group comprising polycarboxylate types, salts of sulfated formaldehyde condensation products with alkylaromatics, salts of sulfated formaldehyde condensation products with ditolyl ether, salts of sulfated formaldehyde condensation products with cyclohexanone, and lignosulfonates and salts thereof,
f. at least one filler selected from the group comprising modified natural silicates, silicate minerals, synthetic silicates and fumed silicas, attapulgites and fillers based on synthetic polymers.
g. at least one solvent selected from compounds or mixtures of compounds represented by formula 4, wherein

y = 1-3

A,B = H, or Methyl, independent from each other, and

M = Methyl;

with the exception of 1,2-propylene glycol which is explicitly excluded from the definition according to g).
h. further adjuvants.

In an even further preferred embodiment, the invention provides an insecticidal composition comprising:

a. compound having the formula (I-2) having the following structure:

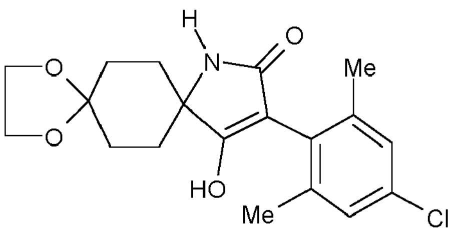
(I-2)

b. flupyradifurone,

c. at least one ammonium salt selected from the group comprising ammonium sulfate (AMS) and diammonium hydrogenphosphate (DAHP),

d. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment, A is a polypropylene glycol fragment consisting of 10 to 40 propylene oxide (PO) units (formula III-b), preferably consisting of 15-35 PO units, more preferably consisting of 20-30 PO units, B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

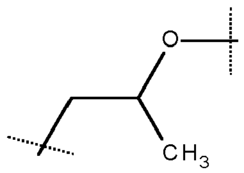

**Formula III-b**

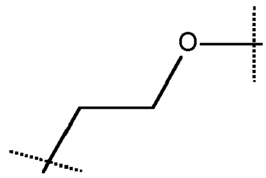

**Formula III-c**

and alkyl polypropylene glycol-polyethylene glycol compounds of the general formula (IIId)

$$R\text{-}O\text{-}(C_mH_{2m}O)_x\text{-}(C_nH_{2n}O)_y\text{-}R' \qquad \text{(IIId)}$$

in which the individual radicals and indices have the following definitions:
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

e. at least one surfactant selected from the group comprising polycarboxylate types,

f. at least one filler selected from the group comprising fumed silicas and attapulgites.

g.at least one solvent selected from compounds or mixtures of compounds represented by formula 4, wherein

y = 1-3

A,B = H, or Methyl, independent from each other, and

M = Methyl; with the exception of 1,2-propylene glycol which is explicitly excluded from the definition according to g).

h. further adjuvants.

In a most preferred embodiment, the invention provides an insecticidal composition comprising:

a. compound having the formula (I-2) having the following structure:

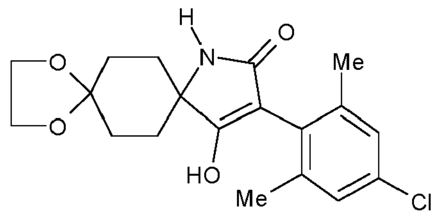
(I-2)

b. flupyradifurone,

c. at least one ammonium salt selected from the group comprising ammonium sulfate (AMS) and diammonium hydrogenphosphate (DAHP),

d. at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

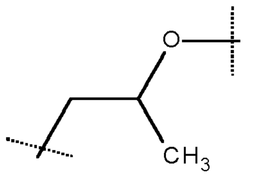

**Formula III-b**

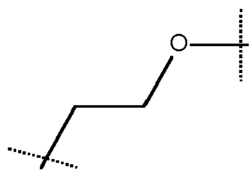

**Formula III-c**

and alkyl polypropylene glycol-polyethylene glycol compounds of the general formula (IIId)

$$R\text{-}O\text{-}(C_mH_{2m}O)_x\text{-}(C_nH_{2n}O)_y\text{-}R' \quad \text{(IIId)}$$

in which the individual radicals and indices have the following definitions:
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

e. at least one surfactant selected from the group comprising polycarboxylate types,

f. at least one filler selected from the group comprising fumed silicas and attapulgites.

g. at least one solvent or solvent mixture selected from the group comprising dipropylene glycol monomethyl ether, 1-methoxy-2-propanol and dipropylene glycol

h. further adjuvants.

Compound I-2 is preferably used in the form of its most thermodynamically stable polymorphous structure.

Percentages - unless stated otherwise - should be regarded as percentages by weight, where the % by weight of the compositions add up to 100.

The proportions of the individual components which follow are each based on the total weight of the composition, where the proportion up to 1 litre of the overall composition is made up by component h) (solvent). The proportion of component h) is thus preferably of 1% to 80% by weight, further preferably of 20-60% by weight.

The proportion of the solid active ingredient (component a) in the compositions according to the invention is

preferably 0.5-30% by weight,

further preferably 1-20% by weight, and

more preferably 1-15% by weight.

The proportion of the dissolved active ingredient (component b) in the compositions according to the invention is

preferably 1-20% by weight,

further preferably 1-16% by weight, and

more preferably 1-12% by weight.

The proportion of the ammonium salt (component c) in the compositions according to the invention is

preferably 1-40% by weight,

further preferably 5-35% by weight, and

more preferably 15-30% by weight.

The proportion of the dispersant (component d) in the compositions according to the invention is

preferably 0.5-40% by weight,
further preferably 2.5-35% by weight, and
more preferably 5-30% by weight.

The proportion of the surfactant (component e) in the compositions according to the invention is

preferably 0-10% by weight,
further preferably 0.3-8% by weight, and
more preferably 0.5-2.5% by weight.

The proportion of the filler (component f) in the compositions is

preferably 0.1-10% by weight,
further preferably 0.5-10% by weight, and
more preferably 2-10% by weight.

The proportion of the further adjuvants (component h) in the compositions according to the invention is

preferably 1-20% by weight,
further preferably 2.5-17.5% by weight, and
more preferably 5-15% by weight.

A preferred embodiment of the invention is compositions comprising components

a) 1-30% by weight
b) 1-20% by weight
c) 1-40% by weight
d) 1-40% by weight
e) 0-10% by weight
f) 0.1-15% by weight
h) 1-20% by weight
g) to one litre.

A further-preferred embodiment of the invention is compositions comprising components

a) 2-20% by weight
b) 1-60% by weight
c) 5-35% by weight
d) 5-35% by weight
e) 0.3-8% by weight
f) 0.5-12.5% by weight
h) 2.5-17.5% by weight
g) to one litre.

An even further-preferred embodiment of the invention is compositions comprising components

a) 2-15% by weight
b) 1-12% by weight
c) 15-30% by weight
d) 10-30% by weight
e) 0.5-2.5% by weight
f) 1-10% by weight
h) 5-15% by weight
g) to one litre.

The present invention further relates to adjuvant combinations for insecticidal active ingredient formulations having at least one dissolved active ingredient and one active ingredient in solid form for improving the penetration of both active ingredients, comprising

c. at least one ammonium salt, and
d. at least one dispersant from the class of the alkyl propoxylated ethoxylates.

In a preferred embodiment, the adjuvant combination further comprises

g. a solvent selected from compounds or mixtures of compounds represented by formula 4, wherein

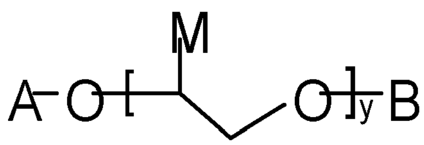

formula 4

y = 1-9

A,B = H, or linear C 1-C4-Alkyl, independent from each other, and

M = H, or C1-C2-Alkyl;

with the exception of 1,2-propylene glycol which is explicitly excluded from the definition according to g).

The ammonium salt from the adjuvant combination is preferably selected from the group comprising water-soluble inorganic ammonium salts.

Further preferably, c) is selected from the group comprising ammonium carbonate, ammonium hydrogensulfate, ammonium sulfate (AMS), ammonium hydrogencarbonate, ammonium carbonate and diammonium hydrogenphosphate (DAHP).

More preferably, b) is DAHP and AMS.

Component d) (dispersant) of the adjuvant combination is preferably selected from the group comprising alkyl polypropylene glycol-polyethylene glycol compound of the general formula (III-a)

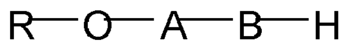

**(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO-) units (formula III-c) together with 0-10 propylene glycol (PO) units, preferably consisting of 20-40 EO units together with 0-8 PO units, more preferably consisting of 30-40 EO units together with 0-5 PO units.

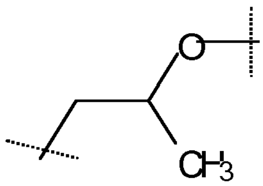

**Formula III-b**

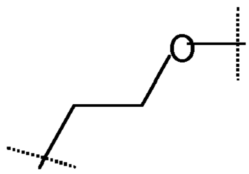

**Formula III-c**

Examples of "alkyl polypropylene glycol-polyethylene glycol compounds" are:

| Trade name | Manufacturer |
|---|---|
| Antarox B/848 | Solvay |
| Antarox BL-470 | Solvay |
| Antarox BL-480 | Solvay |
| Atlas G 5000 | Croda |
| Atlas G 5002 | Croda |
| Emulsogen 3510 | Clariant |
| Emulsogen EP 4901 | Clariant |
| Ethylan NS 500 K | Akzo Nobel |
| Ethylan NS 500 LQ | Akzo Nobel |
| Ethylan NS 505 K | Akzo Nobel |
| Lucramul AG 411 | Levaco |
| Synergen 848 | Clariant |
| Termul 5429 | Huntsman |
| Tergitol XD | Dow |
| Toximul 8320 | Stepan |
| Toximul 8325 | Stepan |
| Ultraric 5000 | Oxiteno |

and the compounds of the general formula (IIId)

$$R\text{-}O\text{-}(C_mH_{2m}O)_x\text{-}\ (C_nH_{2n}O)_y\text{-}R' \qquad \text{(IIId)}$$

in which the individual radicals and indices have the following definitions:
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3.

In the context of the present invention, a linear $C_1$- to $C_5$-alkyl radical is understood to mean a methyl radical, an ethyl radical, an n-propyl radical, an n-butyl radical or an n-pentyl radical.
In the context of the present invention, a branched $C_3$- or $C_4$-alkyl radical is understood to mean an isopropyl radical, an isobutyl radical or a tert-butyl radical.
In a preferred embodiment, the R and R' radicals are independently selected from the group consisting of a methyl radical, an n-butyl radical and hydrogen.
In an even more preferred embodiment, the R and R' radicals are independently selected from the group consisting of an n-butyl radical and hydrogen.
With regard to the arrangement of the polyethylene and polypropylene units,

(a) either m may assume the value of 2 and n the value of 3;
(b) or m the value of 3 and n the value of 2.

Preference is given to configuration (b) with m = 3 and n = 2.
Very particular preference is given to alkyl polypropylene glycol-polyethylene glycol compounds of the formula (IIId) in which

m is 3,
n is 2,
x is 5 to 80,
y is 5 to 80,
R is n-butyl or hydrogen and
R' is hydrogen.

The solvent g) used with the adjuvant combination is further preferably selected from compounds or mixtures of compounds represented by formula 4, wherein

y = 1-5

A,B = H, or linear C 1-C4-Alkyl, independent from each other, and

M = H;

Or g) is selected from compounds or mixtures of compounds represented by formula 4, wherein

y = 1-5

A,B = H, or linear C1-C4-Alkyl

M = C1-C2-Alkyl;

with the exception of 1,2-propylene glycol which is explicitly excluded from the definition according to g).

Even further preferred, g) is selected from compounds represented by formula 4, wherein

y = 1-3

A,B = H, or Methyl, independent from each other, and

M = Methyl; with the exception of 1,2-propylene glycol which is explicitly excluded from the definition according to g).

Most preferably, g) is selected from the group comprising dipropylene glycol monomethyl ether, 1-methoxy-2-propanol and dipropylene glycol.
In a preferred embodiment, solvents g) according to the invention can occur in mixtures. Mixtures of any one of g) can be present in ratios ranging from 1:50 to 50:1, preferably in ratios ranging from 1: 25 to 25:1, more preferably in mixtures ranging from 1:10 to 10:1, such as 1:10, 1:8, 1:6, 1:5, 1:2, 1:1, 2:1, 5:1, 6:1, 8:1 or 10:1. Yet another preferred embodiment comprises mixtures of any one of g) in ratios ranging from 1:8 to 1:1, or in ratios ranging from 1:1 to 8:1.
A preferred embodiment of the invention is adjuvant combinations having a ratio (based in each case on the mass) of c) to d) of 3:1 to 1:3, preferably of 2:1 to 1:2 and more preferably of 1.3:1 to 1:1.3.
The proportion of the adjuvant combination based on the weight of the overall formulation is preferably

c) 1-40% by weight
d) 1-40% by weight,
further preferably
c) 5-35% by weight
d) 5-35% by weight, and
even further preferably
c) 15-30 % by weight
d) 10-30% by weight.

The application rate of the formulations according to the invention can be varied within a relatively wide range. It is guided by the respective active ingredients and by the content thereof in the compositions. The application volume of the formulations according to the invention in aqueous spray solutions can also be varied in a relatively wide range, which means that the applicable spray volume can be varied from 10 to 500 l/ha.
With the aid of the compositions according to the invention, the insecticidal active ingredient mixtures can be deployed in a particularly advantageous manner on plants and/or their habitat.
The compositions according to the invention can be used to treat all plants and parts of plants. Plants in this context are understood to include all plants and plant populations, such as desired and unwanted wild plants or crop plants (including naturally occurring crop plants). Crop plants may be plants which can be obtained by conventional breeding and optimization methods or by biotechnological and genetic engineering methods or combinations of these methods, including the transgenic plants and including the plant cultivars which are protectable or non-protectable by plant breeders' rights. Parts of plants shall be understood to mean all parts and organs of the plants above and below ground, such as shoot, leaf, flower and root, examples given being leaves, needles, stalks, stems, flowers, fruit bodies, fruits and seeds, and also tubers, roots and rhizomes. Plant parts also include harvested material and vegetative and generative propagation material, for example cuttings, tubers, rhizomes, shoots and seeds.
Preferably, the formulations according to the invention are used by spray application against animal pests from the following pest families:
Preference is given from the family of the woolly aphids (Pemphigidae) to: Eriosoma spp., Pemphigus spp., in crops such as, for example, citrus fruit, pomaceous fruit, stone fruit, leaf vegetables, root and tuber vegetables and ornamental plants.
Preference is given from the family of the grape lice (Phylloxeridae) to: Phylloxera spp. in grapevines, nuts, citrus fruit.
Preference is given from the family of the jumping plant lice (Psyllidae) to: Psylla spp., Paratrioza spp., Tenalaphara spp., Diaphorina spp., Trioza spp., in crops such as, for example, pomaceous fruit, stone fruit, citrus fruit, vegetables, potatoes, in tropical crops.
Preference is given from the family of the soft scales (Coccidae) to: Ceroplastes spp., Drosicha spp., Pulvinaria spp., Protopulminaria spp., Saissetia spp., Coccus spp., in perennial crops such as, for example, citrus fruit, pomaceous fruit, stone fruit, olives, grapevines, coffee, tea, tropical crops, ornamental plants, vegetables.
Preference is given from the family of the armoured scale insects (Diaspididae) to: Quadraspidiotus spp., Aonidiella spp., Lepidosaphes spp., Aspidiotus spp., Aspis spp., Diaspis spp., Parlatoria spp., Pseudaulacaspis spp., Unaspis spp., Pinnaspis spp., Selenaspidus spp., in crops such as, for example, citrus fruit, pomaceous fruit, stone fruit, almonds, pistachios, nuts, olives, tea, ornamental plants, grapevines, tropical crops.
Preference is given from the family of the ensign scales (Ortheziidae) to: Orthezia spp. in citrus fruit, pomaceous fruit, stone fruit.
Preference is given from the family of the mealy bugs (Pseudococcidae) to: Pericerga, Pseudococcus spp., Planococcus spp., Dysmicoccus spp., in crops such as, for example, citrus fruit, stone fruit and pomaceous fruit, tea, grapevines, vegetables, ornamental plants and tropical crops.

Preference is furthermore given from the family of the whiteflies (Aleyrodidae) to: Bemisia tabaci, Bemisia argentifolii, Trialeurodes vaporariorum, Aleurothrixus floccosus, Aleurodes spp., Dialeurodes spp., Parabemisia myricae in crops such as, for example, vegetables, melons, potatoes, tobacco, soft fruit, citrus fruit, ornamental plants, cotton, soya beans and tropical crops.

Moreover, preference is given from the family of the aphids (Aphidae) to:

Myzus spp. in tobacco, stone fruit, soft fruit, fruit vegetables, leafy vegetables, tuber and root vegetables, melons, potatoes, ornamental plants, spices,

Acyrthosiphon onobrychis in vegetables,

Aphis spp. in tobacco, citrus fruit, pomaceous fruit, stone fruit, melons, strawberries, soft fruit, fruit vegetables, leafy vegetables, tuber, stem and root vegetables, ornamental plants, potatoes, pumpkins, spices,

Rhodobium porosum in strawberries,

Nasonovia ribisnigri in leafy vegetables,

Macrosiphum spp. in ornamental plants, potatoes, leafy vegetables and fruit vegetables, strawberries,

Phorodon humuli in hops,

Brevicoryne brassicae in leafy vegetables,

Toxoptera spp. in citrus fruit, stone fruit, almonds, nuts, spices,

Aulacorthum spp. in citrus fruit, potatoes, fruit vegetables and leafy vegetables,

Anuraphis cardui in vegetables,

Brachycaudus helycrisii in sunflowers,

Acyrthosiphon onobrychis in vegetables.

Likewise, preference is given from the family of the thrips (Thripidae) to: Anaphothrips spp., Baliothrips spp., Caliothrips spp., Frankliniella spp., Heliothrips spp., Hercinothrips spp., Rhipiphorothrips spp., Scirtothrips spp., Kakothrips spp., Selenothrips spp. and Thrips spp., in crops such as, for example, fruit, cotton, grapevines, tea, nuts, tropical crops, ornamental plants, conifers, tobacco, spices, vegetables, soft fruit, melons, citrus fruit and potatoes.

Moreover, preference is given from the families of the leaf-miner flies (Agromyzidae) and root-maggot flies (Anthomyiidae) to: Agromyza spp., Amauromyza spp., Atherigona spp., Chlorops spp., Liriomyza spp., Oscinella spp., Pegomyia spp. in crops such as, for example, vegetables, melons, potatoes, nuts, ornamental plants.

Preference is given from the families of the leafhoppers (Cicadellidae) and planthoppers (Delphacidae) to: Circulifer spp., Dalbus spp., Empoasca spp., Erythroneura spp., Homalodisca spp., Iodioscopus spp., Laodelphax spp., Nephotettix spp., Nilaparvata spp., Oncometopia spp., Sogatella spp., in crops such as, for example, citrus fruit, fruit, grapevines, potatoes, vegetables, ornamental plants, conifers, melons, soft fruit, tea, nuts, rice and tropical crops.

Preference is given from the family of the leaf-miner moths (Gracillariidae) to:
Caloptilia spp., Gracillaria spp., Lithocolletis spp., Leucoptera spp., Phtorimaea spp., Phyllocnistis spp. in crops such as pomaceous fruit, stone fruit, grapevines, nuts, citrus fruit, conifers, potatoes, coffee.

Preference is given from the family of the gall midges (Cecidomyiidae) to:
Contarinia spp., Dasineura spp., Diplosis spp., Prodiplosis spp., Thecodiplosis spp., Sitodiplosis spp., Haplodiplosis spp. in crops such as citrus fruit, pomaceous fruit, stone fruit, vegetables, potatoes, spices, soft fruit, conifers, hops.

Likewise, preference is given from the family of the fruit flies (Tephritidae) to:
Anastrepha spp., Ceratitis spp., Dacus spp., Rhagoletis spp. in crops such as vegetables, soft fruit, melons, pomaceous and stone fruit, ornamental plants, potatoes, grapevines, tropical crops, citrus fruit, olives.

Moreover, preference is given to mites from the families of the spider mites (Tetranychidae) and the gall mites (Eriophydae):
Tetranychus spp., Panonychus spp., Aculops spp. in crops such as vegetables, potatoes, ornamental plants, citrus fruit, grapevines, conifers.

The inventive treatment of the plants and parts of plants with the compositions according to the invention is effected directly or by allowing the compositions to act on their surroundings, environment or storage space by the customary treatment methods, for example by drenching, immersion, spraying, evaporation, fogging, scattering, painting on and, in the case of propagation material, in particular in the case of seeds, also by applying one or more coats.
Preferably, the plant to be treated is selected from the group consisting of cotton, soya beans, tobacco, vegetables, spices, ornamental plants, conifers, citrus plants, fruit, tropical crops, nuts and grapevines.
Preferably, the composition according to the invention acts against pests from the families of the woolly aphids, grape lice, jumping plant lice, soft scales, armoured scale insects, ensign scales, mealy bugs, whiteflies, aphids, thrips, leafhoppers, planthoppers, leaf-miner flies, gall midges, fruit flies, leaf-miner moths, spider mites, gall mites.
It has also been found that the compositions according to the invention can be produced by a process having the steps of:

1) mixing ingredients (a) to (h) with subsequent homogenization and bead grinding. Relevant equipment for homogenization and bead grinding is known to those skilled in the art.

This process too forms part of the subject-matter of the invention.
Finally, it has been found that the compositions according to the invention are of very good suitability for application of the active agrochemical ingredients present to plants and/or the habitat thereof. This process too forms part of the subject-matter of the invention. The examples which follow illustrate the subject-matter of the invention without limiting it.

**Materials an methods:**

| **Trade name** | **CAS No.** | **Manufacturer/ supplier** | **Chemical name** |
|---|---|---|---|
| Geropon T/36 | 37199-81-8 | Solvay | Maleic anhydride 2,4,4-trimethylpentene polymer sodium salt |
| SAG 1572 | 63148-62-9 | Momentive | Dimethylsiloxane and silicone |
| Antarox B/848 | 9038-95-3 | Solvay | Alkyl propoxylate ethoxylate MW 2600, 48% EO |
| Aerosil R812S | 68909-20-6 | Evonik | Partially hydrophobized fumed amorphous silica, average BET surface 220+-25 m2/g |
| Morwet D-425 | 68425-94-5 | Akzo Nobel | Condensed naphthalene formaldehyde sulfonate, sodium salt |
| Diammonium hydrogenphosphate (DAHP) | 7783-28-0 | various | (NH4)2HPO4 |
| Dowanol DPM | 34590-94-8 | Dow | Dipropylene glycol monomethyl ether |
| Dowanol PM | 107-98-2 | Dow | 1 -Methoxy-2-propanol |
| Propylene glycol | 57-55-6 | various | 1,2-propylene glycol |
| Dipropylene glycol | 25265-71-8 | Dow | Dipropylene glycol |

The following tests and methods apply:

Rotational Viscosity is measured according to CIPAC MT 192. Stable and convenient formulations are expected to exhibit medium-ranged viscosities in order to allow for convenient bottle emptying and cleaning.
Rheology was measured using a Bohlin Gemini Rheometer. The measurement of G' (elastic modulus), G" (viscous modulus) and Phase Angle are measured at different frequencies (between 0.01-5 Hz) at room temperature using a frequency sweep routine with ether strain or stress control, and figures were reported at 0,5 Hz. It is generally accepted by people familiar in the art that small Phase Angles and large figures for G' (>G") indicate a high probability for stable formulations while large Phase Angles and small figures for G' (<G") indicate a high probability for less stable formulations.

Particle size is determined either by laser diffraction according to CIPAC MT 187 Malvern Mastersizer, medium: propylene glycol) or by using an optical microscope (40x magnification). Stable and convenient formulations are expected to contain small particles in order to ensure both good storage stability in concentrate as well as good suspension stability in aqueous dilution.

Suspension stability is evaluated following simplified method according to CIPAC MT 180 and is measured in 2% aqueous dilution in CIPAC D water and determined after 1 hour standing time. Stable and convenient formulations are expected to exhibit no or only very little sediment formation at the bottom of the test vessel in order to ensure a homogeneous application of the spray solution.

Storage testing is performed for a given number of weeks (w) at different temperatures such as 0°C, 20°C, 30°C, 40°C, 54°C or thaw-freeze cycling (or temp. cycling; continuous temperature change from -15°C to +30°C and back within one week).

Redispersibility of samples is determined qualitatively by shaking the samples with subsequent assessment of the base of the sample vessel.

Assessment of formulation characteristics takes place analogously to DIN 10964 "Sensory analysis - Simple descriptive test". For this purpose, the samples to be examined are examined visually and, if required, by means of shaking and tilting, for shape, state of matter and colour and further peculiarities (especially, for example, lumps, caking, sediment formation, subsequent thickening, marbling of the sediment etc.).

Phase separation directly after storage is reported either as sediment fraction and calculated from the quotient H1 [level of the interface layer between sediment phase and supernatant] divided by H0 [total fill height of the sample] or, as in the present case, as supernatant fraction:

$$\text{Sediment fraction} = (H1/H0) * 100\ [\%]$$

or

$$\text{Supernatant fraction} = 100 - \text{sediment content}\ [\%]$$

Stable and convenient formulations are expected to exhibit no or only little phase separation upon storage at elevated temperatures for a prolonged period of time and are easily rehomogenized. Marked phase separation after a short storage time indicates limited storage stability and a significant tendency to formation of sediments that are dispersible only with difficulty, if at all, during storage.

## Example I

All formulation constituents according to the experiments described in Table I are combined in a suitable vessel and homogenized while stirring. Subsequently, bead grinding is conducted (e.g. Dispermat SL50, 80% 2 mm beads, 4000 rpm, circulation grinding) until a particle size of 10-15μ is reached (determination by microscopy). The resultant formulation is analysed by means of e.g. suspension stability and rotational viscosity. Subsequently, a storage test is conducted at elevated temperature and then a quantitative assessment of phase separation after storage.

**Table 1** (figures in grams per L)

| example # | I-1* | I-2* | I-3* | I-4 |
|---|---|---|---|---|
| Compound 1-2 | 12 | 12 | 12 | 12 |
| Flupyradifurone | 75 | 75 | 75 | 75 |
| DAHP | 250 | 250 | 250 | 250 |
| Aerosil R812S | 30 | 30 | 30 | 30 |
| SAG 1572 | 0,5 | 0,5 | 0,5 | 0,5 |
| Geropon T/36 | 10 | 10 | 10 | 10 |
| Morwet D-425 | 10 | 10 | 10 | 10 |
| Antarox B/848 | 200 | 200 | 200 | 200 |
| Dowanol DPM | to vol. (~532,5) | | | |

(continued)

| example # | I-1* | I-2* | I-3* | I-4 |
|---|---|---|---|---|
| Dowanol PM | | to vol. (~512,5) | | |
| Propylene glycol | | | | to vol. (~572,5) |
| Dipropylene glycol | | | to vol. (~562,5) | |
| particle appearance (microscopy) | ~5-10 μm | ~5-10 μm | ~10-15μ | >15μ |
| rotational viscosity @ 7,5 1/s [mPa*s] | 333,0 | 290,0 | 1520,0 | 1726,0 |
| suspension stability at DoM: sediment after 1h [mL] | 0,0 | 0,0 | 0,0 | n.t. |
| Supernatant after 2w20°C [%] | 0,0 | 5,0 | 0,0 | n.t |
| suspension stability 2w20°C: sediment after 1h [mL] | < 0,10 | < 0,10 | < 0,10 | n.t. |
| Supernatant after 2w54°C [%] | 6,0 | 6,0 | 0,0 | n.t. |
| suspension stability 2w54°C: sediment after 1h [mL] | < 0,10 | < 0,10 | < 0,10 | n.t. |
| Supernatant after 2 w 40°C [%] | 2,0 | 5,0 | 0,0 | n.t. |
| Supernatant after 2 w temp. cycling [%] | 0,0 | 0,0 | 0,0 | n.t. |
| * examples according to invention. DAHP = Diammoniumhydrogenphosphate; DOM = Day of Manufacturing | | | | |

Discussion: As depicted in Table I, formulations prepared according to example I-1 to I-3 exhibit suitable particle sizes and excellent suspension stability together with a low to medium viscosity and very low phase separation after storage for 2 weeks at different conditions. The formulation prepared according to example I-4 exhibits a high viscosity combined with coarse particles and is thus not according to the invention. In this case the preparation of a sample with smaller particle size was not pursued due to the build-up of high viscosity already after milling for some minutes upon which the milling process was stopped.

## Example II

All formulation constituents according to the experiments described in Table II are combined in a suitable vessel and homogenized while stirring. Subsequently, bead grinding is conducted (e.g. Dispermat SL50, 80% 2 mm beads, 4000 rpm, circulation grinding) until a particle size of 10-15μ is reached (determination by microscopy). The resultant formulation is analysed by means of e.g. suspension stability, rotational viscosity and Rheology (determination of phase angle, G' and G"). Subsequently, a storage test is conducted at elevated temperature and then a quantitative assessment of phase separation after storage is done.

**Table II** (figures in grams per L)

| Example # | II-1* | II-2 | II-3* | II-4* | II-5* | II-6 | II-7 | II-8* | II-9* |
|---|---|---|---|---|---|---|---|---|---|
| Compound 1-2 | 12 | 12 | 12 | 12 | 12 | 12 | 12 | 12 | 12 |
| Flupyradifurone | 75 | 75 | 75 | 75 | 75 | 75 | 75 | 75 | 75 |
| DAHP | 250 | 250 | 250 | 250 | 250 | 250 | 250 | 250 | 250 |
| Aerosil R812S | 40 | 40 | 40 | 40 | 35 | 30 | 35 | 35 | 40 |
| SAG 1572 | 0,5 | 0,5 | 0,5 | 0,5 | 0,5 | 0,5 | 0,5 | 0,5 | 0,5 |
| Geropon T/36 | 10 | 10 | 10 | 10 | 10 | 10 | 10 | 10 | 10 |
| Morwet D-425 | 10 | 10 | 10 | 10 | 10 | 10 | 10 | 10 | 10 |
| Antarox B/848 | 200 | 200 | 200 | 200 | 200 | 200 | 200 | 200 | 200 |
| Propylene glycol | 80,5 | 170 | | | 80 | 279,5 | 259,5 | | |
| Dipropylene glycol | | | | | | | | to vol. (~352,5) | 262,5 |
| Dowanol DPM | to vol. (~452) | to vol. (~372,5) | to vol. (~312,5) | | | | | | |
| Dowanol PM | | | 200 | to vol. (~502,5 ) | to vol. (~439,5 ) | to vol. (~283 ) | to vol. (~260 ) | 175 | to vol. (~260 ) |

* inventive example; DAHP = Diammoniumhydrogenphosphate

Discussion:

| Example # | II-1 * | II-2 | 11-3 * | II-4 * | II-5 * | II-6 | II-7 | II-8 * | II-9 * |
|---|---|---|---|---|---|---|---|---|---|
| rotational viscosity @ 7,5 1/s [mPa*s] | 709 | 1191 | 596 | 663 | 634 | 827 | 1508 | 632 | 1096 |
| Phase Angle [°] | 19,9 | 19,7 | 20,6 | 17,8 | 22,9 | 19,1 | 19,6 | 31,8 | 19,9 |
| G' Elastic Modulus [Pa] | 73,9 | 125,2 | 47,68 | 69,8 | 59,84 | 207,7 | 371,5 | 21,76 | 104 |
| G" Viscous Modulus [Pa] | 26,8 | 44,8 | 17,9 | 22,4 | 25,27 | 72,08 | 132,2 | 13,5 | 37,5 |
| suspension stability at DoM: sediment after 1h [mL] | 0,0 | 0,5 | 0,0 | | | 0,0 | 0,0 | 0,0 | 0,0 |
| supernatant after 4w20°C [%] | 3,0 | | | 0 | 0 | 0,0 | | 0,0 | |
| supernatant after 4w40°C [%] | 5,0 | | | 3 | 2 | 14,0 | | 2,0 | |
| supernatant after 8w temp. - cycling [%] | | | | 2,0 | 0,0 | | | | |
| supernatant after 8w@40°C [%] | | | | 12,0 | 5,0 | | | | |
| supernatant after 16w@20°C [%] | | 0,0 | 4,0 | | 1,0 | | 3,0 | | 6,0 |
| supernatant after 16w@40°C [%] | | 10,0 | 2,0 | | 9,0 | | 5,0 | | 5,0 |
| * inventive example; DoM = Day of Manufacturing | | | | | | | | | |

All formulations according to the invention exhibit viscosities below or around 1000 mPa*s @ 7,5 1/s which can be considered of practical usefulness (Table 1, examples II-1; II-3 to II-5; II-8; II-9). All examples exhibit small phase angles at or around 30° which attributes to a good storage stability. However, all examples according to the invention exhibit an elastic Modulus G' of around or below 100 Pa and a corresponding viscous Modulus G" which is significantly below G'. With regard to phase separation, all formulations according to the invention exhibit no or only low levels of supernatant after 4, 8 or 16 weeks of storage at either 20°C/ roomtemp, 40°C or temp. cycling. Thus, after storage at 40°C for 8 or 16 weeks, respectively, a maximum of phase separation between 0-10% was observed. Formulations that contain large amounts of propylene glycol exhibit higher viscosities and/or higher level of supernatant up to 14% (Table I, examples II-2; II-6; II-7) and are therefore not according to the invention.

**Example III**

For the purpose of testing different levels of carrier fluids g), adjuvants h) and water-insoluble filler f) all formulation constituents according to the experiments described in Table III are combined in a suitable vessel and homogenized while stirring. Subsequently, bead grinding is conducted (e.g. Dispermat SL50, 80% 2 mm beads, 4000 rpm, circulation grinding) until a particle size of 10-15μ is reached (determination by microscopy). The resultant formulation is analysed by means of suspension stability, rotational viscosity and Rheology. Subsequently, a storage test is conducted at elevated temperature and then a quantitative assessment of suspension stability after storage is performed.

Table 3 (figures in gram per L)

| **Example No.** | **III-1*** | **III-2*** | **III-3** | **III-4** | **III-5** |
|---|---|---|---|---|---|
| Compound 1-2 | 12 | 12 | 12 | 12 | 12 |
| Flupyradifurone | 75 | 75 | 75 | 75 | 75 |
| DAHP | 250 | 250 | 250 | 250 | 250 |
| SAG1572 | 0,5 | 1 | 0,5 | 0,5 | 0,5 |
| Geropon T36 | 10 | 10 | 10 | 10 | 10 |
| Morwet D-425 | 10 | 10 | 10 | 10 | 10 |

(continued)

| Example No. | III-1* | III-2* | III-3 | III-4 | III-5 |
|---|---|---|---|---|---|
| Antarox B/848 | 200 | 200 | 200 | 200 | 200 |
| Propylenglycol | 80 | 120 | 160 | 200 | 240 |
| Aerosil R812S | 40 | 40 | 40 | 40 | 40 |
| Dowanol DPM | to volume (~432,5) | to volume (422,5) | to volume (~362,5) | to volume (~322,5) | to volume (~292,5) |
| d(max) after preparation [μm] | 12,0 | 10,0 | 12,0 | 12,0 | 12,0 |
| rotational viscosity [mPa*s] @ 7,5 1/s | 1017 | 992,0 | 1325 | 1518 | 2234 |
| Phase Angle [°] | 18 | n.t | 20,5 | 17,9 | 15,5 |
| G' Elastic Modulus [Pa] | 108,9 | n.t | 98,5 | 158 | 288 |
| G" Viscous Modulus [Pa] | 35,4 | n.t | 36,8 | 51,6 | 79,9 |
| suspension stability at DoM: sediment after 1h [mL] | 1,0 | 0,0 | 1,0 | 0,0 | 0,0 |
| suspension stability 1w54°C: sediment after 1h [mL] | 0,0 | 0,0# | 8,0 | 10,0 | 10,0 |
| suspension stability 1w20°C: sediment after 1h [mL] | 0,0 | 0,0# | 8,0 | 0,0 | 0,0 |
| * inventive example; DAHP = Diammoniumhydrogenphosphate; #determined after 2 weeks | | | | | |

Discussion: Formulations prepared according to example III-1 and III-2 exhibit a medium viscosity and and a good suspension stability even after storage; moreover, example III-1 exhibits a small phase angle, an elastic Modulus G' of around or below 100 Pa together with a corresponding viscous Modulus G" which is significantly below G'. Thus, III-1 and III-2 are examples according to the invention. Formulations prepared according to example III-3 are slightly higher in viscosity and exhibit a similar G' compared to III-1 which can be attributed to the increased amount of propylene glycol in this recipe. Formulations prepared according to example III-4 and III-5 exhibit an increasing and high viscosity and elastic Modulus G' which can again be attributed to the increased amount of propylene glycol in this recipe.

**Example IV**

For the purpose of testing different combinations of at least one active ingredient solid at room temperature a) with at least one active ingredient b) while keeping the formulation recipe unchanged, suitable active ingredients were selected as specified in Table IV, combined and homogenized while stirring.

Subsequently, bead grinding is conducted (Dispermat SL50, 80% 2 mm beads, 4000 rpm, circulation grinding for 40 min) and the resultant formulation is analysed by means of e.g. suspension stability, rotational viscosity and particle size assessment. Subsequently, a storage test is conducted at elevated temperature and samples were furthermore assessed including the determination of phase separation after storage.

**Table IV** (figures in gram per L)

| Example # | IV-1* | IV-2* | IV-3* | IV-4* | IV-5* | IV-6* | IV-7* | IV-8* |
|---|---|---|---|---|---|---|---|---|
| Flupyradifurone | 75 | 75 | 75 | 75 | 75 | | 75 | |
| Acetamiprid | | | | | | 50 | | |
| Flonicamid | | | | | | | | 50 |
| Compund 1-2 | | | | | | 25 | 50 | 25 |
| Tetraniliprole | 50 | | | | | | | |
| Cyantraniliprole | | 50 | | | | | | |

(continued)

| Example # | IV-1* | IV-2* | IV-3* | IV-4* | IV-5* | IV-6* | IV-7* | IV-8* |
|---|---|---|---|---|---|---|---|---|
| Ethiprole | | | 50 | | | | | |
| Spirotetramat | | | | 50 | | | | |
| Thiacloprid | | | | | 50 | | | |
| DAHP | 250 | 250 | 250 | 250 | 250 | 250 | 250 | 250 |
| Aerosil R812S | 40 | 40 | 40 | 40 | 40 | 40 | 40 | 30 |
| SAG 1572 | 1 | 1 | 1 | 1 | 1 | 1 | 1 | 1 |
| Geropon T/36 | 10 | 10 | 10 | 10 | 10 | 10 | 10 | 10 |
| Morwet D-425 | 10 | 10 | 10 | 10 | 10 | 10 | 10 | 10 |
| Antarox B/848 | 200 | 200 | 200 | 200 | 200 | 200 | 200 | 200 |
| Propylene glycol | 120 | 120 | 120 | 120 | 120 | 120 | 120 | 80 |
| Dowanol DPM | to vol. (~384) | to vol. (~384) | to vol. (~384) | to vol. (~384) | to vol. (~384) | to vol. (~434) | to vol. (~384) | To vol. (~484) |
| rotational viscosity @ 7,5 1/s [mPa*s] | 1440,0 | 1205,0 | 1170,0 | 945,0 | 848,0 | 686,0 | 1176,0 | 356,0 |
| d90 [μm] at DoM | 5,58 | 5,39 | 5,97 | 5,38 | 3,91 | 3,48 | 6,02 | 5,63 |
| d90 [μm] after storage 2w 54°C | 5,63 | 5,5 | 6,03 | 8,53 | 3,93 | 3,52 | 6,29 | n/a |
| d90 [μm] after storage 2w 20°C | 5,74 | 5,5 | 6,08 | 5,52 | 3,99 | 3,64 | 6,27 | n/a |
| Supernatant after 2w 54°C [%] | 1,0 | 2,0 | 1,0 | 1,0 | 0,0 | 1,0 | 2,0 | 5,0 |
| Supernatant after 2w 20°C [%] | 0,0 | 0,0 | 0,0 | 0,0 | 0,0 | 0,0 | 0,0 | 5,0 |
| Supernatant after 2w temp. cycling [%] | 0,0 | 0,0 | 0,0 | 0,0 | 0,0 | 0,0 | 0,0 | n/a |
| suspension stability at DoM: sediment after 1h [mL] | 0,0 | 0,0 | 0,0 | 0,0 | 0,0 | 0,0 | 0,0 | 0,0 |
| suspension stability 2w 54°C: sediment after 1h [mL] | 0,0 | 0,0 | 0,1 | 0,0 | 0,0 | 0,0 | 0,0 | 0,0 |
| suspension stability 2w 20°C: sediment after 1h [mL] | 0,0 | 0,0 | 0,1 | 0,0 | 0,0 | 0,0 | 0,0 | 0,0 |
| * inventive example; DAHP = Diammoniumhydrogenphosphate; DoM = Day of Manufacturing | | | | | | | | |

Discussion: Examples IV-1 to IV-7 exhibit a rotational viscosity between 850 and 1500 mPa*s at 7.5 1/s combined with a particle size d90 of between 3 to 6 μm (Malvern result) and excellent suspension stabilities after 1h. After storage for 2 weeks hardly any phase separation was detected and only marginal changes in particle size are visible (exemption is example IV-4 where some crystal growth is visible after storage at 54°C) which indicates stable formulations that are according to the invention. Moreover, suspension stabilities after storage are continuously good and even excellent in some cases.

**Example V**

Cuticle penetration by flupyradifurone and compound I-2

Experimental procedure:

This test measures the penetration of active ingredients through enzymatically isolated cuticles of apple tree leaves.

Leaves that have been cut off apple trees in the developed state and isolated by the method described in Schönherr and Riederer (Schönherr, J., Riederer, M. (1986)) are used. Only the cuticles of the top sides of the leaves that are free of stomata and hair are used further.

For membrane transport studies, the cuticular membranes thus obtained are placed into stainless steel diffusion cells (= transport chambers). For this purpose, the cuticles are placed with tweezers onto the middle of the silicone grease-smeared edges of the diffusion cells and sealed with a likewise greased ring. The arrangement is chosen such that the morphological outside of the cuticles is directed outward, i.e. toward the air, while the original inside faces the inside of the diffusion cell. The diffusion cells are filled with water or with a mixture of water and solvent and buffered to the physiologically relevant pH of 5.5. The medium in the diffusion cells is supposed to simulate the apoplast, i.e. the natural absorption medium within the leaf. This method is of good suitability for systemic and mechanistic studies with the aim of understanding the effect of the formulations, adjuvants and solvents on penetration of the crop protection compositions.

To determine the penetration, 5 μl in each case of a spray liquor containing the active ingredients Flupyradifurone and 1-1 in specified formulations (cf. Table V) hereinafter are applied to the outside of a cuticle. The active ingredient concentration corresponds to the field application rate customary in practice. For preparation of the spray liquor the corresponding ingredients in the given amounts are given into tap water and homogenized by mixing.

After the spray liquors have been applied, the water is allowed to evaporate in each case, then the chambers are inverted and they are placed into thermostated tanks, wherein air at a defined air humidity and temperature is blown onto the outside of the cuticles in each case. The penetration that sets in therefore takes place at a relative air humidity of 56% and a set temperature of 25°C. At regular intervals, an autosampler is used to take samples and the content of penetrated active ingredient is measured by means of HPLC. The numbers reported are average values from 5 to 10 individual measurements in each case.

**Table V: Penetration test results**

| | Amount [g/L] present in aqueous spray solution | | | | | | Penetration after 24h [%] | |
|---|---|---|---|---|---|---|---|---|
| # | Compd I-2 | Flupyradifurone | Solvent 1§ | Solvent 2§ | Antarox B/848 | DAHP* | Flupyradifurone | Compd I-2 |
| 1 | 0,1 | 0,5 | | | | | 5,1 | 0 |
| 2 | 0,1 | 0,5 | | | | 1,6 | 29,2 | 11,9 |
| 3 | 0,1 | 0,5 | | | 1,3 | | 73 | 28,6 |
| 4 | 0,1 | 0,5 | | | 1,3 | 1,6 | 82,8 | 90,1 |
| 5 | 0,1 | 0,5 | 1,8 (B) | 1,8 (C) | 1,3 | 1,6 | 87,2 | 55 |
| 6 | 0,1 | 0,5 | 1,8 (B) | 1,8 (D) | 1,3 | 1,6 | 100 | 70 |
| 7 | 0,1 | 0,5 | 2,1 (A) | 1,4 (B) | 1,3 | 1,6 | 100 | 65 |
| 8 | 0,1 | 0,5 | 2,5 (A) | 1,2 (C) | 1,3 | 1,6 | 95 | 61 |

* DAHP= Diammoniumhydrogenphosphat, $:A = Dipropylenglycolmonomethylether, B = Propylenglycolmonomethylether, C = Propylenglycol, D = Dipropylenglycol

Evaluation of the experiments:

The two active substances tested, flupyradifurone and I-2, on their own show barely any, if any, cuticle penetration either when employed without additives (Table V, entry 1). The applications of active ingredients in the presence of diammoniumhydrogenphosphate (DAHP) and especially Antarox B/848 independently lead to an improvement in cuticle penetration for both active ingredients tested (Table V entries 2-3). As soon as Antarox B/848 and DAHP are used in combination, the maximum penetration potential is found, which is the additive combination of the individual effects for both active ingredients in the formulation (Table V, entry 4). In the presence of different solvent combinations (Table V, entries 5-8) together with a combination of Antarox B/848 and DAHP a very similar effect can be observed; while Flupyradifurone exhibits increased penetration behaviour the penetration of I-2 is slightly reduced, albeit still on a very high level and certainly better than with Antarox B/848 or DAHP alone.

## Claims

1. Composition comprising:

   a) at least one active ingredient solid at room temperature,
   b) at least one active ingredient soluble in an organic solvent other than a),
   c) at least one ammonium salt,
   d) at least one dispersant from the class of the alkyl propoxylate ethoxylates,
   e) optionally one or more surfactants,
   f) at least one water-insoluble filler,
   g) at least a solvent selected from compounds represented by formula 4, wherein

   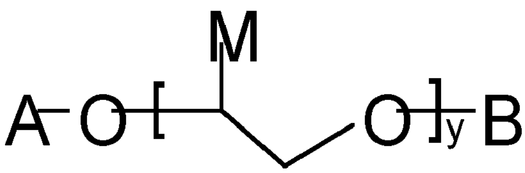

   formula 4

   y = 1-9
   A,B = H, or linear C1-C4-Alkyl, independent from each other, and
   M = H, or C1-C2-Alkyl, ; with the exception of 1,2-propylene glycol which is explicitly excluded from the definition according to g).
   and

   h) further adjuvants,
   where active ingredient a) is insoluble or only sparingly soluble in the chosen solvent g).

2. Composition according to Claim 1, **characterized in that** component e) is obligatory.

3. Composition according to Claim 1 or 2, **characterized in that** a) is selected from the group of the active insecticidal ingredients having a solubility in the chosen solvent g) of not more than 5 g/l, further preferably not more than 4 g/l, even further preferably not more than 2.5 g/l, and especially preferably not more than 1 g/l.

4. Composition according to one or more of the preceding claims, **characterized in that** a) is selected from the group comprising diamide insecticides, spinosyns (IRAC Group 5), mectins (IRAC Group 6), ethiprole, triflumuron, deltamethrin, thiacloprid and tetronic acid or tetramic acid derivatives (IRAC Group 23, including the compounds of the formulae I and II specified below.

5. Composition according to one or more of the preceding claims, **characterized in that** a) is selected from the group of the tetronic acid or tetramic acid derivatives (IRAC Group 23), including the compounds of the formulae I and II

specified below.

6. Composition according to one or more of the preceding claims, **characterized in that** a) is a tetramic acid derivative of the formula (I)

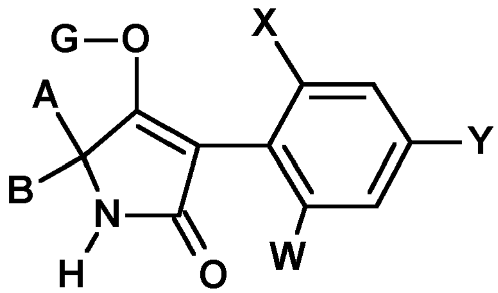

(I)

in which

W and Y are independently hydrogen, C 1-C4-alkyl, chlorine, bromine, iodine or fluorine,
X is C1-C4-alkyl, C1-C4-alkoxy, chlorine, bromine or iodine,
A, B and the carbon atom to which they are bonded are C3-C6-cycloalkyl substituted by an optionally C1-C4-alkyl- or $C_1$-$C_4$-alkoxy-$C_1$-$C_2$-alkyl-substituted alkylenedioxy group that forms a 5-membered or 6-membered ketal together with the carbon atom to which it is bonded,
G is hydrogen (a) or is one of the groups

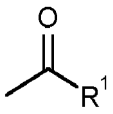 (b), 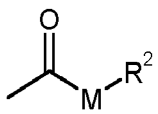 (c),

E (d)
in which
E is a metal ion or an ammonium ion,
M is oxygen or sulfur,
R1 is straight-chain or branched C1-C6-alkyl,
R2 is straight-chain or branched C1-C6-alkyl.

7. Composition according to one or more of the preceding claims, **characterized in that** component a) is a compound of the formula (I-2)

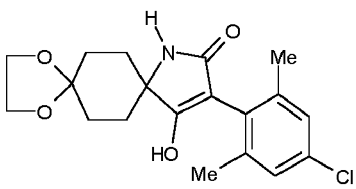

(I-2).

8. Composition according to one or more of the preceding claims, **characterized in that** b) is selected from the group of insecticides comprising nAChR agonists, flonicamid and 4-[[(6-chloropyridin-3-yl)methyl](3-fluoro-n-propyl)amino]furan-2(5H)-one, 4-[[(6-chloropyridin-3-yl)methyl](3,3-dichloroprop-2-en-1-yl)amino]furan-2(5H)-one, 4-[[(6-chloropyridin-3-yl)methyl](2-fluoroethyl)amino]furan-2(5H)-one, (E/Z)-4-[[(6-chloropyridin-3-yl)methyl](2-fluorovinyl)amino]-5-methylfuran-2(5H)-one, 4-[[(6-chloropyridin-3-yl)methyl](2,2-difluoroethyl)amino]-5-methylfuran-2(5H)-one, 3-bromo-4-[[(6-chloropyridin-3-yl)methyl](2,2-difluoroethyl)amino]furan-2(5H)-one, 3-chloro-4-[[(6-chloropyridin-3-yl)methyl](2,2-difluoroethyl)amino]furan-2(5H)-one, and 4-[methyl[(6-chloropyridin-3-yl)methyl](amino)]furan-2(5H)-one.

**9.** Composition according to one or more of the preceding claims, **characterized in that** b) is selected from the group consisting of imidacloprid, clothianidin, flupyradifurone, flonicamid and acetamiprid.

**10.** Composition according to one or more of the preceding claims, **characterized in that** b) is flupyradifurone.

**11.** Composition according to one or more of the preceding claims, **characterized in that** c) is selected from the group comprising ammonium carbonate, ammonium hydrogensulfate, ammonium sulfate (AMS), ammonium hydrogencarbonate, ammonium carbonate and diammonium hydrogenphosphate (DAHP).

**12.** Composition according to one or more of the preceding claims, **characterized in that** d) is selected from the group comprising alkyl polypropylene glycol-polyethylene glycol compound of the general formula (III-a)

$$R-O-A-B-H$$

**(III-a)**

where R is a C1-C4 fragment, preferably a C3-C4 fragment, more preferably a C4 fragment,
A is a polypropylene glycol fragment consisting of 10 to 40 propylene oxide (PO) units (formula III-b), preferably consisting of 15-35 PO units, more preferably consisting of 20-30 PO units,
B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

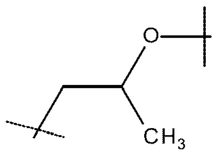

**Formula III-b**

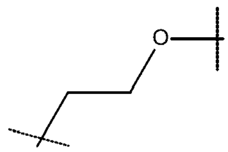

**Formula III-c**

and alkyl polypropylene glycol-polyethylene glycol compounds of the general formula (IIId)

$$R\text{-}O\text{-}(C_mH_{2m}O)_x\text{-}(C_nH_{2n}O)_y\text{-}R' \qquad \text{(IIId)}$$

in which
R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3.

**13.** Composition according to one or more of the preceding claims, **characterized in that** e) is a surfactant selected from the group comprising polycarboxylate types, salts of sulfated formaldehyde condensation products with alkylaromatics, salts of sulfated formaldehyde condensation products with ditolyl ether, salts of sulfated formaldehyde condensation products with cyclohexanone, and lignosulfonates and salts thereof.

**14.** Composition according to one or more of the preceding claims, **characterized in that** f) is selected from the group comprising modified natural silicates, silicate minerals, synthetic silicates and fumed silicas, attapulgites and fillers based on synthetic polymers.

**15.** Composition according to one or more of the preceding claims, **characterized in that** g) is selected from a solvent represented by formula 4, wherein

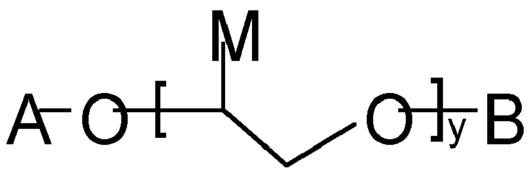

formula 4

y = 1-3
A,B = H, or linear C 1-C4-Alkyl, independent from each other, and
M = H, or C 1-C2-Alkyl, ; with the exception of 1,2-propylene glycol which is explicitly excluded from the definition according to g).

**16.** Composition according to one or more of the preceding claims, **characterized in that** the components are present as follows:

a) 1-30% by weight
b) 1-20% by weight
c) 1-40% by weight
d) 1-40% by weight
e) 0-10% by weight
f) 0.1-15% by weight
h) 1-20% by weight
g) to one litre.

**17.** Composition according to one or more of the preceding claims, **characterized in that** the components are present as follows:

a) 2-15% by weight
b) 1-12% by weight
c) 15-30% by weight
d) 10-30% by weight
e) 0.5-2.5% by weight
f) 1-10% by weight
h) 2.5-17.5% by weight
g) to one litre.

**18.** Composition according to one or more of the preceding claims, comprising

a) compound having the formula (I-2) having the following structure:

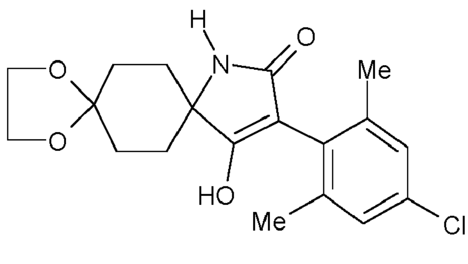
(I-2)

b) flupyradifuron,

c) at least one ammonium salt selected from the group comprising ammonium sulfate (AMS) and diammonium hydrogenphosphate (DAHP),

d) at least one dispersant selected from the group comprising alkyl polypropylene glycol-polyethylene glycol compound of the general formula (III-a)

R-O-A-B-H **(III-a)**

where R is a C1-C4 fragment, preferably a C3-C4 fragment, more preferably a C4 fragment, A is a polypropylene glycol fragment consisting of 10 to 40 propylene oxide (PO) units (formula III-b), preferably consisting of 15-35 PO units, more preferably consisting of 20-30 PO units,

B is a randomly copolymerized polyethylene glycol-polypropylene glycol fragment consisting of 10-50 ethylene oxide (EO) units (formula III-c) together with 0-10 propylene glycol (PO) units, preferably consisting of 20-40 EO units together with 0-8 PO units, more preferably consisting of 30-40 EO units together with 0-5 PO units,

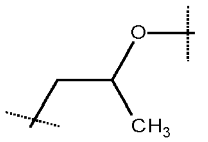

**Formula III-b**

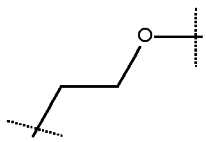

**Formula III-c**

and alkyl polypropylene glycol-polyethylene glycol compounds of the general formula (IIId)

$$R\text{-}O\text{-}(C_mH_{2m}O)_x\text{-}(C_nH_{2n}O)_y\text{-}R' \qquad \text{(IIId)}$$

in which the individual radicals and indices have the following definitions:

R and R' are independently hydrogen, a linear $C_1$- to $C_5$-alkyl radical or a branched $C_3$- or $C_4$-alkyl radical;

m is 2 or 3;
n is 2 or 3;
x is 5 to 150; and
y is 5 to 150,

where one radical n or m has the meaning of 2 and the other radical n or m has the meaning of 3,

e) at least one surfactant selected from the group comprising polycarboxylate types,

f) at least one filler selected from the group comprising fumed silicas and attapulgites,

g) is selected from the group comprising dipropylene glycol monomethyl ether, 1-methoxy-2-propanol and dipropylene glycol, and

h) further adjuvants.

**19.** Use of a composition according to one or more of Claims 1 to 18 for controlling insects.

FIGURE 1:

**Fig. 1: X-ray diffraction pattern of I-2 (Mod. A)**

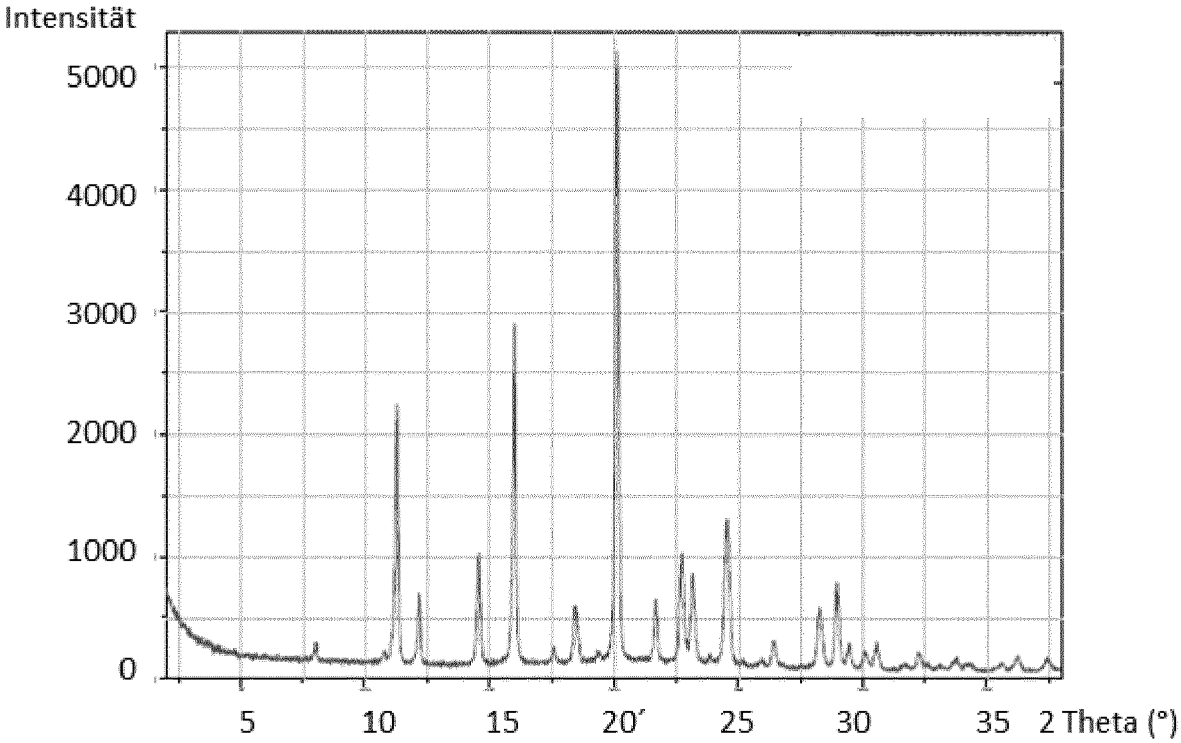

FIGURE 2 :

FIG. 2: IR-Spectrum

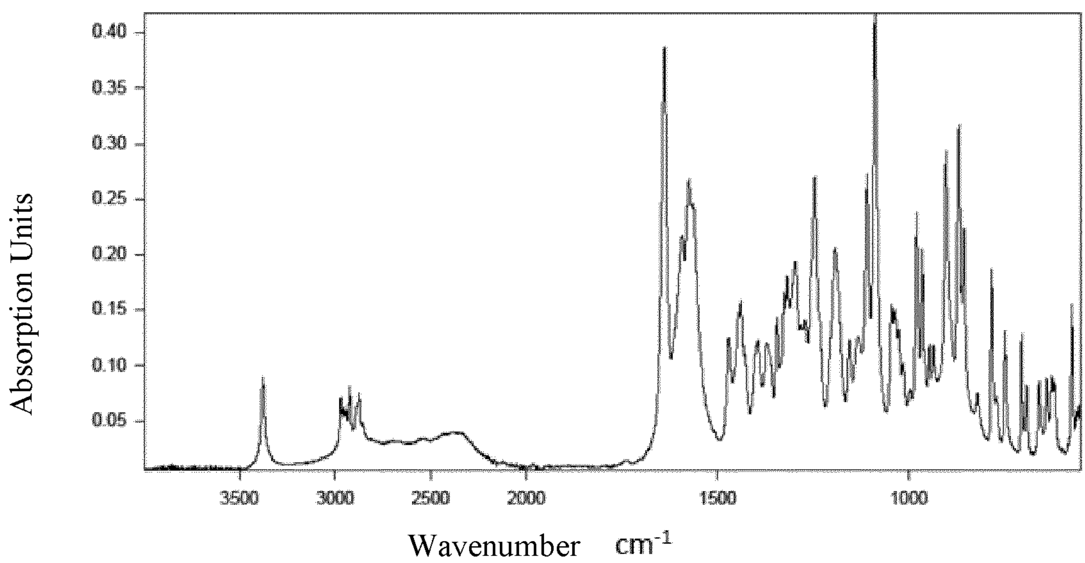

Europäisches Patentamt
European Patent Office
Office européen des brevets

# EUROPEAN SEARCH REPORT

Application Number
EP 23 15 9276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2011/029552 A2 (BAYER CROPSCIENCE AG [DE]; STORK ANDREAS [DE] ET AL.) 17 March 2011 (2011-03-17)<br>* page 1, line 8 - line 14 *<br>* page 8, line 8 *<br>* page 11, line 13 - line 16 *<br>* page 18, line 1 - line 20 *<br>----- | 1-19 | INV.<br>A01N25/04<br>A01N25/30<br>A01N43/40<br>A01N43/78<br>A01N33/12<br>A01P7/00<br>A01N43/56<br>A01N47/06<br>A01N47/40<br>A01N43/36 |
| Y | WO 2008/151725 A1 (BAYER CROPSCIENCE AG [DE]; VERMEER RONALD [DE] ET AL.) 18 December 2008 (2008-12-18)<br>* page 1, line 1 - line 2 *<br>* page 1, line 27 - line 33 *<br>* page 3, line 30 - line 33 *<br>* page 5, line 25 - page 6, line 9 *<br>* page 9, line 18 - line 32 *<br>* example 1 *<br>* table I *<br>----- | 1-19 | |
| Y | WO 2009/004281 A2 (SYNGENTA LTD [GB]; WILLIAMS KIRSTY JANE [GB] ET AL.) 8 January 2009 (2009-01-08)<br>* page 1, line 1 - line 32 *<br>* page 2, line 10 - line 14 *<br>* page 3, line 13 - line 21 *<br>* page 4, line 28 - line 32 *<br>* page 5, line 10 - line 15 *<br>* page 6, line 5 - line 15 *<br>* page 7, line 10 - line 27 *<br>* page 9, line 4 - line 11 *<br>* Entries 1D, 1E;<br>table 1 *<br>* example 3 *<br>-----<br>-/-- | 1-19 | TECHNICAL FIELDS SEARCHED (IPC)<br>A01N |

The present search report has been drawn up for all claims

1

| Place of search | Date of completion of the search | Examiner |
|---|---|---|
| Munich | 20 June 2023 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 15 9276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | WO 2019/197635 A1 (BAYER AG [DE]) 17 October 2019 (2019-10-17) * page 1, line 1 - line 25 * * page 2, line 7 - line 21 * * page 5, line 1 - line 6 * * page 19, line 24 - line 28 * * page 22, line 15 - line 24 * * page 27, line 1 - line 14 * * page 29, line 3 - line 5 * * tables Ia, IIIa * ----- | | |
| A | WO 2008/148483 A1 (BAYER CROPSCIENCE AG [DE]; JESCHKE PETER [DE] ET AL.) 11 December 2008 (2008-12-11) * page 36, line 5 - page 41, line 10 * * page 55, line 6 - page 59, line 20 * * examples 1,2 * ----- | 1-19 | |
| A | WO 2007/068356 A1 (BAYER CROPSCIENCE AG [DE]; FUNKE CHRISTIAN [DE] ET AL.) 21 June 2007 (2007-06-21) * page 8, line 5 - page 9, line 1 * * page 14, line 13 - page 19, line 9 * * examples 1,2 * ----- | 1-19 | TECHNICAL FIELDS SEARCHED (IPC) |

The present search report has been drawn up for all claims

1

| Place of search | Date of completion of the search | Examiner |
|---|---|---|
| Munich | 20 June 2023 | Zanobini, Alessandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 23 15 9276

This annex lists the patent family members relating to the patent documents cited in the above-mentioned European search report. The members are as contained in the European Patent Office EDP file on
The European Patent Office is in no way liable for these particulars which are merely given for the purpose of information.

20-06-2023

| Patent document cited in search report | Publication date | Patent family member(s) | Publication date |
|---|---|---|---|
| WO 2011029552 A2 | 17-03-2011 | AP 3070 A | 31-12-2014 |
| | | AR 078113 A1 | 12-10-2011 |
| | | AU 2010294603 A1 | 29-03-2012 |
| | | BR 112012005597 A2 | 08-09-2015 |
| | | CL 2012000644 A1 | 05-10-2012 |
| | | CN 102573461 A | 11-07-2012 |
| | | CO 6511233 A2 | 31-08-2012 |
| | | DK 2477488 T3 | 31-08-2015 |
| | | EP 2305030 A1 | 06-04-2011 |
| | | EP 2477488 A2 | 25-07-2012 |
| | | ES 2544730 T3 | 03-09-2015 |
| | | HR P20150902 T1 | 25-09-2015 |
| | | JP 5583220 B2 | 03-09-2014 |
| | | JP 2013504527 A | 07-02-2013 |
| | | KR 20130026406 A | 13-03-2013 |
| | | PL 2477488 T3 | 30-11-2015 |
| | | PT 2477488 E | 16-09-2015 |
| | | SI 2477488 T1 | 30-10-2015 |
| | | TW 201112951 A | 16-04-2011 |
| | | US 2011086848 A1 | 14-04-2011 |
| | | US 2018035666 A1 | 08-02-2018 |
| | | WO 2011029552 A2 | 17-03-2011 |
| | | ZA 201202430 B | 25-09-2013 |
| WO 2008151725 A1 | 18-12-2008 | AR 066934 A1 | 23-09-2009 |
| | | AU 2008261348 A1 | 18-12-2008 |
| | | BR PI0813810 A2 | 06-01-2015 |
| | | CA 2694028 A1 | 18-12-2008 |
| | | CL 2008001606 A1 | 19-12-2008 |
| | | CN 101677528 A | 24-03-2010 |
| | | CO 6241135 A2 | 20-01-2011 |
| | | EP 2002719 A1 | 17-12-2008 |
| | | EP 2157852 A2 | 03-03-2010 |
| | | JP 2010530365 A | 09-09-2010 |
| | | KR 20100046110 A | 06-05-2010 |
| | | TW 200906296 A | 16-02-2009 |
| | | US 2010179228 A1 | 15-07-2010 |
| | | WO 2008151725 A1 | 18-12-2008 |
| | | ZA 200908127 B | 29-06-2011 |
| WO 2009004281 A2 | 08-01-2009 | AR 067380 A1 | 07-10-2009 |
| | | AU 2008270070 A1 | 08-01-2009 |
| | | BR PI0814188 A2 | 14-10-2014 |
| | | CA 2691183 A1 | 08-01-2009 |
| | | CN 101808512 A | 18-08-2010 |
| | | EP 2175720 A2 | 21-04-2010 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 23 15 9276

This annex lists the patent family members relating to the patent documents cited in the above-mentioned European search report. The members are as contained in the European Patent Office EDP file on
The European Patent Office is in no way liable for these particulars which are merely given for the purpose of information.

20-06-2023

| Patent document cited in search report | Publication date | Patent family member(s) | Publication date |
|---|---|---|---|
| | | JP 5453252 B2 | 26-03-2014 |
| | | JP 2010531864 A | 30-09-2010 |
| | | KR 20100037063 A | 08-04-2010 |
| | | SG 195618 A1 | 30-12-2013 |
| | | TW 200906297 A | 16-02-2009 |
| | | US 2010331187 A1 | 30-12-2010 |
| | | WO 2009004281 A2 | 08-01-2009 |
| | | ZA 200908969 B | 25-05-2011 |
| WO 2019197635 A1 | 17-10-2019 | AR 114781 A1 | 14-10-2020 |
| | | AU 2019250617 A1 | 29-10-2020 |
| | | CN 111970927 A | 20-11-2020 |
| | | EP 3772943 A1 | 17-02-2021 |
| | | IL 277944 A | 30-11-2020 |
| | | JP 2021521213 A | 26-08-2021 |
| | | KR 20200143393 A | 23-12-2020 |
| | | MA 52209 A | 17-02-2021 |
| | | TW 202002781 A | 16-01-2020 |
| | | WO 2019197635 A1 | 17-10-2019 |
| WO 2008148483 A1 | 11-12-2008 | AR 066747 A1 | 09-09-2009 |
| | | AU 2008258886 A1 | 11-12-2008 |
| | | BR PI0812584 A2 | 30-09-2014 |
| | | CL 2008001524 A1 | 12-12-2008 |
| | | CN 101677535 A | 24-03-2010 |
| | | CO 6260007 A2 | 22-03-2011 |
| | | EP 2000027 A1 | 10-12-2008 |
| | | EP 2154957 A1 | 24-02-2010 |
| | | JP 2010529058 A | 26-08-2010 |
| | | KR 20100019502 A | 18-02-2010 |
| | | TW 200908878 A | 01-03-2009 |
| | | US 2010173943 A1 | 08-07-2010 |
| | | WO 2008148483 A1 | 11-12-2008 |
| WO 2007068356 A1 | 21-06-2007 | AU 2006326729 A1 | 21-06-2007 |
| | | BR PI0619819 A2 | 18-10-2011 |
| | | CN 101325876 A | 17-12-2008 |
| | | DE 102005059470 A1 | 14-06-2007 |
| | | EP 1962603 A1 | 03-09-2008 |
| | | JP 2009519259 A | 14-05-2009 |
| | | KR 20080076955 A | 20-08-2008 |
| | | MX 284313 B | 02-03-2011 |
| | | US 2009149506 A1 | 11-06-2009 |
| | | WO 2007068356 A1 | 21-06-2007 |
| | | ZA 200805089 B | 30-09-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011029552 A
- WO 2003000053 A
- WO 2011131623 A
- US 20110281727 A1, Fischer
- WO 2007068428 A
- WO 2008151725 A
- EP 2193712 A1
- WO 2009115262 A
- WO 06089633 A
- WO 08067911 A
- WO 2007115644 A
- WO 2009118025 A
- WO 2008036865 A2